# EUROPEAN PATENT APPLICATION

(11) **EP 3 182 387 A1**
(43) Date of publication of application: **21.06.2017**
(21) Application number: 16202404.6
(22) Date of filing: 06.12.2016
(51) Int. Cl.: G07D 11/00

(54) **VALUABLE ITEM MANAGEMENT SYSTEM, TERMINAL DEVICE, INFORMATION TRANSMISSION METHOD AND PROGRAM**

(30) Priority: 15.12.2015 JP 2015244664
(71) Applicant: LAUREL BANK MACHINES CO., LTD., Tokyo (JP)
(72) Inventor: KATO, Toshihiko, Tokyo, Tokyo (JP)
(74) Representative: Pronovem

(57) **Abstract**

A valuable item management system includes first and second valuable item management devices, and a terminal device that communicates with the first and second communicates with the first and second valuable item management devices. The terminal device includes: an operation input unit that receives, from a user, an instruction relating to the first and second valuable item management devices; an acquisition unit that acquires first and second information based on the received instruction, the first information indicating a process to be performed by the first valuable item management device, the second information relating to the process performed by the first valuable item management device and indicating a process to be performed by the second valuable item management device; and a communication unit transmits the acquired first information to the first valuable item management device, and transmits the acquired second information to the second valuable item management device.

## Description

### BACKGROUND OF THE INVENTION

### Field of the Invention

The present invention relates to a valuable item management system, a terminal device, an information transmission method, and a program.

Priority is claimed on Japanese Patent Application No. 2015-244664, filed December 15, 2015, the content of which is incorporated herein by reference.

### Description of Related Art

Valuable item management devices that manage valuable items such as currency, securities, and bills, generally includes an operation input unit that receives a user operation that inputs an operation instruction or required data for operating the valuable item management device according to an intent of an operator (user of the valuable item management device). In Patent Document 1, described is a cashier machine provided with an operation unit for example.

### SUMMARY OF THE INVENTION

If a plurality of valuable item management devices exists, there is a case where an instruction with respect to the plurality of valuable item management devices is related. For example, in a case where a valuable item is to be transferred from a first valuable item management device to a second valuable item management device, demanded is a reduction in effort with respect to inputting an instruction that removes the valuable item from the first valuable item management device and an instruction that places the valuable item in the second valuable item management device.

An object of the present invention is to provide a valuable item management system, a terminal device, an information transmission method, and a program that achieve a reduction in effort with respect to inputting an operation that is related between a plurality of valuable item management devices.

A valuable item management system according to a first aspect of the present invention includes: first and second valuable item management devices; and a terminal device that communicates with the first and second communicates with the first and second valuable item management devices. The terminal device includes: an operation input unit that receives, from a user, an instruction relating to the first and second valuable item management devices; an acquisition unit that acquires first and second information based on the received instruction, the first information indicating a process to be performed by the first valuable item management device, the second information relating to the process performed by the first valuable item management device and indicating a process to be performed by the second valuable item management device; and a communication unit transmits the acquired first information to the first valuable item management device, and transmits the acquired second information to the second valuable item management device.

A terminal device according to a second aspect of the present invention is for communicating with first and second valuable item management devices. The terminal device includes: an operation input unit that receives, from a user, an instruction relating to the first and second valuable item management devices; an acquisition unit that acquires first and second information based on the received instruction, the first information indicating a process to be performed by the first valuable item management device, the second information relating to the process performed by the first valuable item management device and indicating a process to be performed by the second valuable item management device; and a communication unit transmits the acquired first information to the first valuable item management device, and transmits the acquired second information to the second valuable item management device.

An information transmission method according to a third aspect of the present invention is for a terminal device that communicates with first and second valuable item management devices. The information transmission method includes: receiving, from a user, an instruction relating to the first and second valuable item management devices; acquiring first and second information based on the received instruction, the first information indicating a process to be performed by the first valuable item management device, the second information relating to the process performed by the first valuable item management device and indicating a process to be performed by the second valuable item management device; transmitting the acquired first information to the first valuable item management device; and transmitting the acquired second information to the second valuable item management device.

A program according to a fourth aspect of the present invention is for a computer that communicates with first and second valuable item management devices. The program causes the terminal device to execute: receiving, from a user, an instruction relating to the first and second valuable item management devices; acquiring first and second information based on the received instruction, the first information indicating a process to be performed by the first valuable item management device, the second information relating to the process performed by the first valuable item management device and indicating a process to be performed by the second valuable item management device; transmitting the acquired first information to the first valuable item management device; and transmitting the acquired second information to the second valuable item management device.

According to the present invention, it is possible to achieve a reduction in effort with respect to inputting an instruction relating to a plurality of valuable item management devices.

### BRIEF DESCRIPTION OF THE DRAWINGS

FIG. 1 is a schematic diagram showing a device configuration of a valuable item management system according to a first embodiment of the present invention.
FIG. 2 is an explanatory view showing an example of an external form of a cashier machine in the first embodiment.
FIG. 3 is an explanatory view showing an example of an external form of a cash management device in the first embodiment.
FIG. 4 is an explanatory view showing an example of an external form of an important item management device in the first embodiment.
FIG. 5 is a schematic block diagram showing a functionality configuration of a valuable item management device in the first embodiment.
FIG. 6 is a schematic block diagram showing a functionality configuration of a tablet terminal device in the first embodiment.
FIG. 7 is an explanatory view showing a first example of an operation screen displayed by a terminal-side display unit in the first embodiment.
FIG. 8 is an explanatory view showing a second example of an operation screen displayed by the terminal-side display unit in the first embodiment.
FIG. 9 is an explanatory view showing a third example of an operation screen displayed by the terminal-side display unit in the first embodiment.
FIG. 10 is an explanatory view showing a fourth example of an operation screen displayed by the terminal-side display unit in the first embodiment.
FIG. 11 is a schematic block diagram showing a functionality configuration of a terminal management device in the first embodiment.
FIG. 12 is an explanatory view showing an example of an external form of the terminal management device in the first embodiment.
FIG. 13 is an explanatory view showing a summary of an operation of the valuable item management system in the first embodiment.
FIG. 14 is an explanatory view showing an example of a processing sequence in which the terminal management device and the tablet terminal device in the first embodiment perform login processing of a user with respect to the tablet terminal device.
FIG. 15 is an explanatory view showing an example of a sequence in which the tablet terminal device and the valuable item management device in the first embodiment perform connection processing with respect to the valuable item management device.
FIG. 16 is an explanatory view showing an example of a processing sequence in which the tablet terminal device and the valuable item management device in the first embodiment handle an operation with respect to the valuable item management device received by a terminal-side operation input unit.
FIG. 17 is an explanatory view showing an example of a sequence in which the tablet terminal device and the valuable item management device in the first embodiment perform disconnection processing from the valuable item management device.
FIG. 18 is an explanatory view showing an example of a sequence in which the terminal management device and the tablet terminal device in the first embodiment perform logout processing of a user from the tablet terminal device.
FIG. 19 is a schematic block diagram showing a functionality configuration of a valuable item management device according to a second embodiment of the present invention.
FIG. 20 is a schematic block diagram showing a functionality configuration of a tablet terminal device in the second embodiment.
FIG. 21 is an explanatory view showing an example of a sequence in which the tablet terminal device and the valuable item management device in the second embodiment perform connection processing with respect to the valuable item management device.
FIG. 22 is an explanatory view showing an example of a sequence in which the tablet terminal device and the valuable item management device in the second embodiment perform disconnection processing from the valuable item management device.
FIG. 23 is a schematic diagram showing a functionality configuration of a terminal management device according to a third embodiment of the present invention.
FIG. 24 is an explanatory view showing an example of a sequence in which the terminal management device and a tablet terminal device in the third embodiment perform login processing of a user with respect to the tablet terminal device.
FIG. 25 is an explanatory view showing an example of a sequence in which the terminal management device and the tablet terminal device in the third embodiment perform logout processing from the tablet terminal device.
FIG. 26 is a schematic diagram showing a device configuration of a valuable item management system according to a fourth embodiment of the present invention.
FIG. 27 is a schematic diagram showing a functionality configuration of a terminal management device in the fourth embodiment.
FIG. 28 is an explanatory view showing an example of a sequence in which the terminal management device and a tablet terminal device in the fourth embodiment perform login processing of a user with respect to the tablet terminal device.
FIG. 29 is an explanatory view showing an example of an external form of a terminal management device according to a fifth embodiment of the present invention.
FIG. 30 is an explanatory view showing an example of a processing sequence in which the terminal management device and a tablet terminal device in the fifth embodiment set the tablet terminal device to a usable state according to a user.
FIG. 31 is a schematic diagram showing a device configuration of a valuable item management system according to a sixth embodiment of the present invention.
FIG. 32 is an explanatory view schematically showing an operation of the valuable item management system in the sixth embodiment.
FIG. 33 is an explanatory view showing an example of a processing sequence in which a tablet terminal device in the sixth embodiment performs login processing of a user with respect to the tablet terminal device.
FIG. 34 is an explanatory view showing an example of a sequence in which a tablet terminal device in the sixth embodiment performs logout processing of a user from the tablet terminal device.

### DETAILED DESCRIPTION OF THE INVENTION

Hereunder, embodiments of the present invention are described. The scope of the claims is not limited to the embodiments below. Furthermore, all combinations of the characteristics described in the embodiments are not necessarily essential to the solution of the invention.

### <First Embodiment>

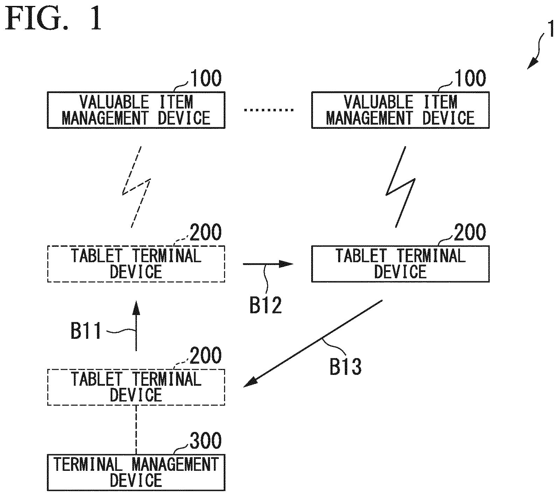

FIG. 1 is a schematic diagram showing a device configuration of a valuable item management system according to a first embodiment of the present invention. As shown in FIG. 1, the valuable item management system 1 includes a plurality of valuable item management devices 100, one or more tablet terminal devices 200, and a terminal management device 300.

The valuable item management system 1 is a system that performs management of valuable items. In particular, the valuable item management system 1 is a system that stores and aggregates valuable items such as cash and securities.

The valuable item management device 100 performs management of valuable items, such as the storage and the aggregation of valuable items. In particular, the valuable item management device 100 performs the storage and the aggregation of valuable items such as cash and securities. In the present embodiment, a case where the valuable item management system 1 includes a cash machine, a cash management device, and an important item management device as valuable item management devices 100 is described as an example.

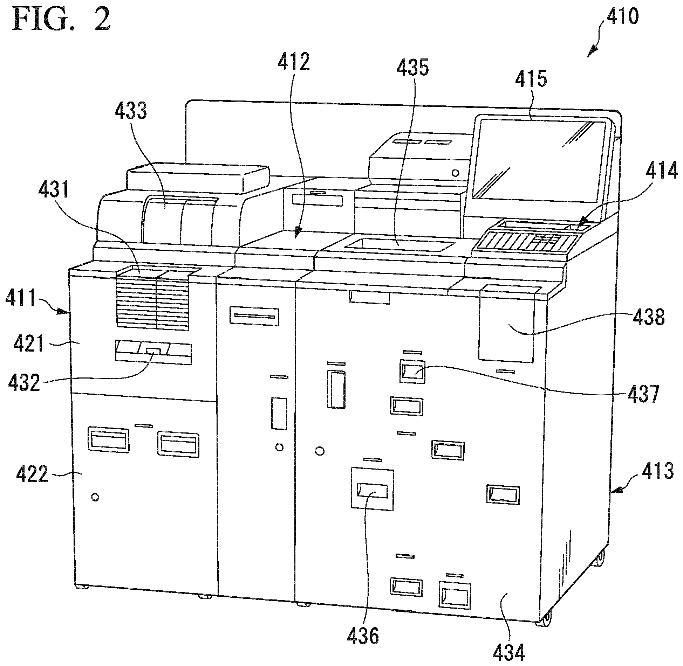

Here, a cashier machine, a cash management device, and an important item management device, which are examples of the valuable item management device 100, are described with reference to FIG. 2 to FIG. 4.

FIG. 2 is an explanatory view showing an example of an external form of a cashier machine. The cashier machine 410 is installed for example in a branch of a financial institution such as a bank, and manages currency processing of the entire branch. The cashier machine 410 performs for example, transaction processing such as deposits and withdrawals by a clerk for major customers, withdrawal processing of cash carried out to an external location or deposit processing for cash carried in from an external location by a clerk. Further, the cashier machine 410 performs closing management of the status of deposits and withdrawals of the entire financial institution branch after close of business.

The cashier machine 410 includes a banknote processing device 411 that performs deposit and withdrawal processing of banknotes and the like, a new banknote processing device 412 that, among banknotes, particularly performs withdrawal processing of new banknotes and the like, and a coin processing device 413 that performs deposit and withdrawal processing of coins and the like. The banknote processing device 411, the new banknote processing device 412, and the coin processing device 413 are laterally arranged side-by-side. The banknote processing device 411 includes a main body 421 and a drawer body 422 that is capable of being drawn out from the main body 421 to the front side. Furthermore, on the upper portion of the front side of the main body 421, the banknote processing device 411 includes a deposit and withdrawal unit 431 in which loose banknotes are inserted from the exterior of the machine and loose banknotes for withdrawal are also fed from the interior of the machine. At the lower side of the deposit and withdrawal unit 431, the banknote processing device 411 includes a deposit rejecting unit 432 in which banknotes that are determined to be unacceptable (deposit-rejected banknotes) are fed from within the cashier machine 410. Moreover, at the upper side of the deposit and withdrawal unit 431, the banknote processing device 411 includes a bundle withdrawal unit 433 that feeds small banknote bundles that are bound in the interior of the main body 421 to the exterior of the cashier machine 410. Further, on the upper portion of the front side of the main body 434, the coin processing device 413 includes a coin deposit unit 435 in which loose coins are inserted from the exterior of the machine, and a coin withdrawal unit 436 in which loose coins for withdrawal are fed from the interior of the machine. At the lower side of the coin deposit unit 435, the banknote processing device 411 includes a coin deposit rejecting unit 437 in which coins that are determined to be unacceptable (deposit-rejected coins) are fed from within the main body 434. Moreover, at the side of the coin deposit unit 435, the banknote processing device 411 includes a coin roll withdrawal unit 438 that feeds coin rolls that are packaged in the interior of the main body 434 to the exterior of the cashier machine 410. Furthermore, on the upper portion of the coin processing device 413, the banknote processing device 411 includes an operation input unit 414 that receives an operation input by a user, and a display unit 415 that performs display with respect to a user.

As a result of this configuration, the cashier machine 410 receives operations that insert and remove cash, stores deposits, and aggregates the inserted and removed cash. Furthermore, the cashier machine 410 performs processes that integrate banknotes and coins (bundling of banknotes and rolling of coins).

In the valuable item management system 1, the operation input unit 414 and the display unit 415 are not essential. That is to say, the cashier machine 410 may not include either or both the operation input unit 414 and the display unit 415.

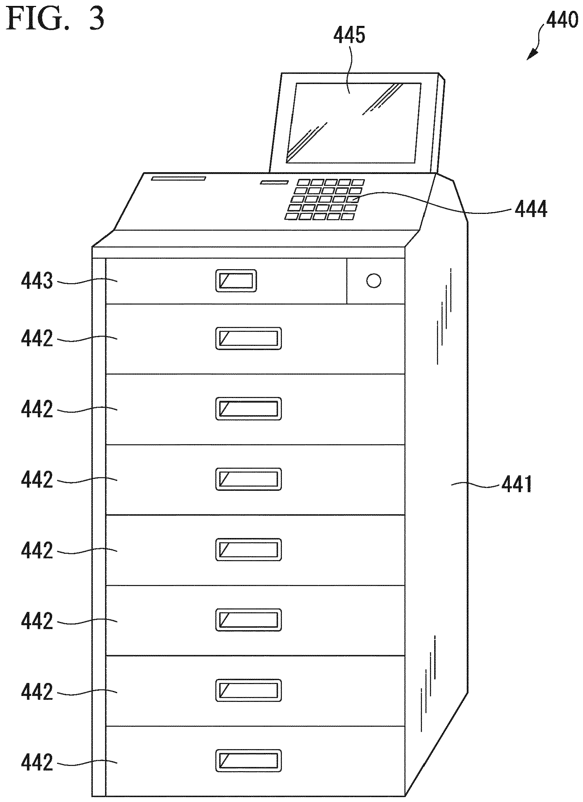

FIG. 3 is an explanatory view showing an example of an external form of a cash management device 440. The cash management device 440 mainly performs management by insertion and removal of banknote bundles and coin rolls, and is installed adjacent to the cashier machine 410 described above. Alternatively, the cash management device 440 is installed in a clerk-side space of a branch and is handled by a clerk, and is utilized as a supplementary device of the cashier machine 410. That is to say, as described above, the cashier machine 410 manages currency processing of an entire branch. In addition to performing deposits and withdrawals of loose banknotes and loose coins, a withdrawal of a small quantity of banknote bundles and coin rolls can be performed by means of the cashier machine 410 alone. On the other hand, when a withdrawal of a large quantity of banknote bundles and coin rolls is necessary, then in order to balance the quantity of banknotes and the quantity of coins that are stored and to shorten the time required for the withdrawal, instead of a large-quantity withdrawal from the cashier machine 410, withdrawal of the banknote bundles and the coin rolls is performed from the cash management device 440. Moreover, when the quantity of banknotes and the quantity of coins within the cashier machine 410 becomes large and storage within the cashier machine 410 is inappropriate, they are respectively made into banknote bundles and coin rolls, and following withdrawal from the cashier machine 410, stored in the cash management device 440. Further, for example, the cash management device 440 locates near customer service counters and stores primarily small banknote bundles and coin rolls such that they are able to be retrieved.

The cash management device 440 includes a box-type cash management device body 441, seven storage compartments 442, and a single-level reserve storage compartment 443. The storage compartments 442 are provided on the front surface of the cash management device 440 and stacked in the vertical direction. The storage compartment 442 stores small banknote bundles and coin rolls such that they are sorted. Furthermore, the reserve storage compartment 443 stores, in addition to loose banknotes, loose coins, damaged banknotes, and damaged coins, securities and other important small items such as a seal stamp. Moreover, an operation input unit 444 and a display unit 445 are provided on the upper portion of the cash management device body 441. The operation input unit 444 receives an operation input by a user. The display unit 445 performs display with respect to a user.

As a result of this configuration, the cash management device 440 stores cash. Furthermore, the cash management device calculates cash from deposits and cash from withdrawals by counting (scanning) the stored cash.

In the valuable item management system 1, the operation input unit 444 and the display unit 445 are not essential. That is to say, the cash management device 440 may not include either or both the operation input unit 444 and the display unit 445.

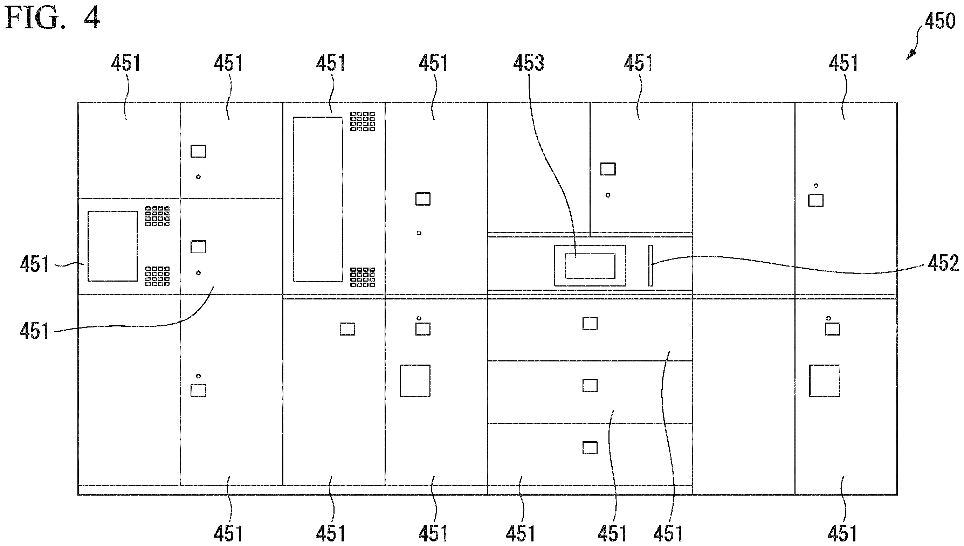

FIG. 4 is an explanatory view showing an example of an external form of an important item management device 450. The important item management device 450 is installed on a floor of an office in a building of a financial institution for example. The important item management device 450 includes a plurality of storage bodies 451. The storage bodies 451 are integrated. Each storage body 451 may have a different size and shape. The storage body 451 has a fire-resistant construction, and stores important items such as cash and securities. Furthermore, the important item management device 450 includes an operation input unit 452 equipped with a card reader that receives an operation in which a user inserts a card, and a display unit 453 that performs display with respect to a user.

As a result of this configuration, the important item management device 450 stores important items such as cash and securities.

In the valuable item management system 1, the operation input unit 452 and the display unit 453 are not essential. That is to say, the important item management device 450 may not include either or both the operation input unit 452 and the display unit 453.

There is a case where operations performed by a user with respect to the cashier machine 410, the cash management device 440, and the important item management device 450 are related. For example, if a user transfers cash that is stored in the cashier machine 410 and divides it between the cash management device 440 and the important item management device 450, the sum of the deposit amount with respect to the cash management device 440 and the deposit amount with respect to the important item management device 450 becomes equal to the withdrawal amount from the cashier machine 410. Therefore, by means of the valuable item management system 1 calculating and recording the deposit amount with respect to the important item management device 450 by subtracting the deposit amount with respect the cash management device 440 from the withdrawal amount from the cashier machine 410, it is not necessary for a user to perform an operation of calculating and recording the amount deposited with respect to the important item management device 450. Consequently, the burden on a user can be reduced.

The valuable item management devices 100 of the valuable item management system 1 are a cashier machine, a cash management device, and an important item management device. The valuable item management system 1 may not include any among a cashier machine, a cash management device, or an important item management device. Furthermore, the valuable item management system 1 may include equipment other than a cashier machine, a cash management machine, or an important item management device as a valuable item management device 100.

The tablet terminal device 200 corresponds to an example of a terminal device, and it functions as a terminal device for a valuable item management device 100. Specifically, the tablet terminal device 200 communicatively connects with the valuable item management device 100. Further, when the tablet terminal device 200 receives a user operation (instruction), the tablet terminal device 200 acquires, based on the user operation, information for making the valuable item management device 100 perform processing, and transmits the information acquired by the tablet terminal device 200 to the valuable item management device 100. As a result, the valuable item management device 100 executes the necessary processing.

Here, the tablet terminal device 200 may generate the information for making the valuable item management device 100 perform processing. Furthermore, the tablet terminal device 200 may acquire from one valuable item management device 100 information for making another valuable item management device 100 perform processing. That is to say, acquiring as referred to here may represent generating, or acquiring from another device.

The terminal management device 300 performs lending processing of a tablet terminal device 200. Specifically, the terminal management device 300 determines whether or not lending of a tablet terminal device 200 with respect to a user is permitted, and further, it selects the tablet terminal device 200 to be loaned to the user. Furthermore, the terminal management device 300 reads out and stores information related to an operation performed on a returned tablet terminal device 200 with respect to a valuable item management device 100. Consequently, the terminal management device 300 collectively manages information related to operations performed on a plurality of tablet terminal devices 200 with respect to a valuable item management device 100.

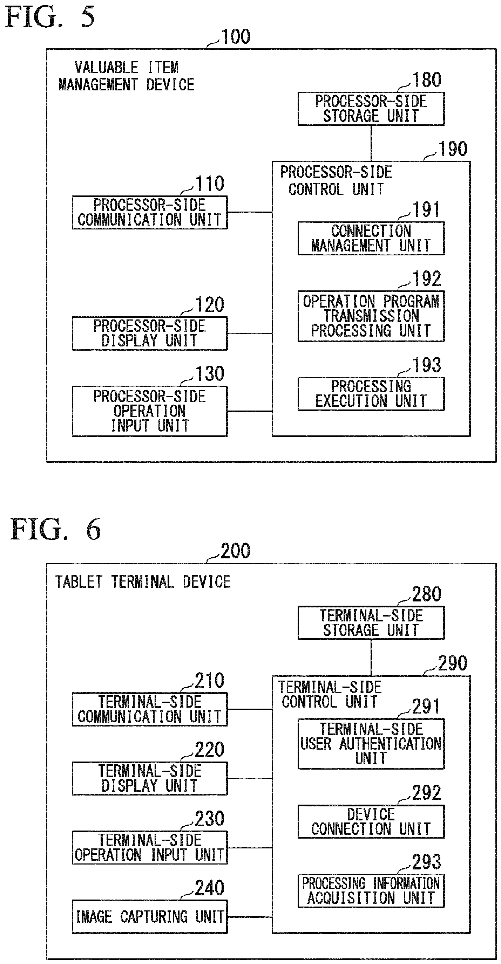

FIG. 5 is a schematic block diagram showing a functionality configuration of the valuable item management device 100. As shown in FIG. 5, the valuable item management device 100 includes a processor-side (processing device-side) communication unit (communication unit) 110, a processor-side display unit (display unit) 120, a processor-side operation input unit (operation input unit) 130, a processor-side storage unit (storage unit) 180, and a processor-side control unit (control unit) 190. The processor-side control unit 190 includes a connection management unit 191, an operation program transmission processing unit 192, and a processing execution unit 193.

The processor-side communication unit 110 communicates with the tablet terminal device 200 by communicatively connecting one-to-one. In particular, if the valuable item management device 100 permits a communication connection between the tablet terminal device 200 and the valuable item management device 100 itself, the processor-side communication unit 110 transmits to the tablet terminal device 200 that has been permitted to communicatively connect, an operation program for displaying on the tablet terminal device 200 an operation screen for operating the valuable item management device 100. The tablet terminal device 200, by executing the operation program, functions as a terminal device for the valuable item management device 100.

The processor-side communication unit 110 communicatively connects one-to-one with the terminal device 200 via Bluetooth for example. In particular, as a result of the processor-side communication unit 110 connecting with the tablet terminal device 200 via a short-distance wireless communication, a user is able to select the valuable item management device 100 that is made to communicatively connect with the tablet terminal device 200, by a simple operation of bringing the tablet terminal device 200 close to the valuable item management device 100.

However, the method in which the processor-side communication unit 110 communicatively connects one-to-one with the tablet terminal device 200 is not limited to a Bluetooth method. For example, the processor-side communication unit 110 may be made to communicatively connect one-to-one with the tablet terminal device 200 by a wireless communication method such as Near Field Communication (NFC) or Infrared Data Association (IrDA). Alternatively, the processor-side communication unit 110 may include a connection terminal that performs a wired connection with the tablet terminal device 200, and may be made to communicatively connect one-to-one by wire with the tablet terminal device 200 connected to the connection terminal. For example, the valuable item management device 100 may have a slot for inserting the tablet terminal device 200, and the processor-side communication unit 110 and the tablet terminal device 200 may communicatively connect when the user inserts the tablet terminal device 200 into the slot.

Furthermore, the processor-side communication unit 110 may be configured such that it is able to simultaneously connect to a plurality of tablet terminal devices 200.

The processor-side display unit 120 includes for example a display panel such as a liquid-crystal panel, and displays various information.

The processor-side operation input unit 130 includes for example an input device such as an operation key, and receives a user operation with respect to the valuable item management device 100.

However, the processor-side display unit 120 and the processor-side operation input unit 130 are not essential to the valuable item management device 100. That is to say, the valuable item management device 100 may not include either or both the processor-side display unit 120 and the processor-side operation input unit 130. Since the tablet terminal device 200 functions as a terminal device of the valuable item management device 100, the valuable item management device 100 is able to display various information on the tablet terminal device 200 instead of the processor-side display unit 120. Furthermore, since the tablet terminal device 200 functions as a terminal device of the valuable item management device 100, the valuable item management device 100 is able to operate according to a user operation received by the tablet terminal device 200 instead of the processor-side operation input unit 130.

In this manner, since the tablet terminal device 200 functions as a terminal device of the valuable item management device 100, user operability can be ensured in a case where the area in which the processor-side operation input unit 130 is mounted is small, or in a case where the valuable item management device 100 does not include a processor-side operation input unit 130.

The processor-side storage unit 180 includes a storage device provided to the valuable item management device 100, and stores various information. In particular, the processor-side storage unit 180 stores an operation program for displaying on the tablet terminal device 200, an operation screen for operating the valuable item management device 100 including the processor-side storage unit 180 itself.

The processor-side control unit 190 controls the respective units of the valuable item management device 100, and executes various functionalities. The processor-side control unit 190 is realized for example by a Central Processing Unit (CPU) provided to the valuable item management device 100, reading out a program from the processor-side storage unit 180, and then executing it.

The connection management unit 191 determines whether or not a communication connection between the processor-side communication unit 110 and the tablet terminal device 200 is permitted. In particular, the connection management unit 191 corresponds to an example of a connection management unit, and permits, according to a communication connection request from the tablet terminal device 200, a communication connection between the tablet terminal device 200 thereof and the valuable item management device 100 including the connection management unit 191 itself. Further, the connection management unit 191 performs device connection processing of the user of the communicatively connected tablet terminal device 200 with respect to the valuable item management device 100. The device connection referred to here represents a communication connection between the tablet terminal device 200 and the valuable item management device 100. Moreover, the connection management unit 191 performs logout processing with respect to the user of the tablet terminal device 200 when the communication connection between the tablet terminal device 200 and the valuable item management device 100 including the connection management unit 191 itself is completed (disconnected).

The operation program transmission processing unit 192 performs processing that transmits to the tablet terminal device 200 an operation program (an operation program for displaying on the tablet terminal device 200 an operation screen for operating the valuable item management device 100 including the operation program transmission processing unit 192 itself) stored in the processor-side storage unit 180. Specifically, when the processor-side communication unit 110 and the tablet terminal device 200 are communicatively connected, the operation program transmission processing unit 192 reads out the operation program stored in the processor-side storage unit 180, outputs the operation program that has been read out to the processor-side communication unit 110, and then transmits it to the tablet terminal device 200.

The processing execution unit 193 executes processing related to insertion, removal, and aggregation of valuable items such as cash or securities. In particular, if the connection management unit 191 permits a communication connection between the tablet terminal device 200 and the valuable item management device 100, it performs processing based on the information (information for making the valuable item management device 100 perform processing) transmitted by the tablet terminal device 200. Furthermore, if the processor-side operation input unit 130 receives a user operation, the processing execution unit 193 performs processing based on the user operation.

FIG. 6 is a schematic block diagram showing a functionality configuration of the tablet terminal device 200. As shown in FIG. 6, the tablet terminal device 200 includes a terminal-side communication unit (communication unit) 210, a terminal-side display unit (display unit) 220, a terminal-side operation input unit (operation input unit) 230, an image capturing unit 240, a terminal-side storage unit (storage unit) 280, and a terminal-side control unit (control unit) 290. The terminal-side control unit 290 includes a terminal-side user authentication unit (user authentication unit) 291, a device connection unit 292, and a processing information acquisition unit 293.

The terminal-side communication unit 210 performs communication by communicatively connecting with the processor-side communication unit 110 of the valuable item management device 100. In particular, the terminal-side communication unit 210 transmits a communication connection request between the terminal-side communication unit 210 itself and the valuable item management device 100, to the valuable item management device 100 which represents the request destination. The valuable item management device 100 receives the communication connection request, and the connection management unit 191 permits a communication connection as described above. The terminal-side communication unit 210 and the processor-side communication unit 110 communicatively connect according to the permission.

Moreover, the terminal-side communication unit 210 transmits, based on an operation received by the terminal-side operation input unit 230, information (information for making the valuable item management device 100 perform processing) acquired by the processing information acquisition unit 293, to the valuable item management device 100 whose communication connection with the tablet terminal device 200 has been permitted.

Further, if the information to be transmitted to the valuable item management device 100 is stored in the terminal-side storage unit 280, the terminal-side communication unit 210 transmits the information to the valuable item management device when the valuable item management device 100 representing the transmission destination of the information and the terminal-side communication unit 210 are communicatively connected.

The terminal-side display unit 220 includes for example a display screen such as a liquid-crystal panel or a Light-emitting Diode (LED) and the like, and displays various images. In particular, if a communication connection is permitted between the tablet terminal device 200 including the terminal-side display unit 220 itself and the valuable item management device 100, the terminal-side display unit 220 displays an operation screen for operating the valuable item management device. Specifically, when the tablet terminal device 200 including the terminal-side display unit 220 itself and the valuable item management device 100 are communicatively connected, and the valuable item management device 100 transmits an operation program, the tablet terminal device 200 temporarily stores the transmitted program in the terminal-side storage unit 280, and then the terminal-side display unit 220 displays an operation screen based on the operation program.

For example, if the tablet terminal device 200 becomes positioned within a predetermined range from the valuable item management device 100, the tablet terminal device 200 and the valuable item management device 100 are communicatively connected, and the valuable item management device 100 transmits an operation program to the tablet terminal device 200. Further, in the tablet terminal device 200, the terminal-side communication unit 210 receives the operation program and temporarily stores it in the terminal-side storage unit 280, and then the terminal-side display unit 220 executes the operation program and displays an operation screen for operating the valuable item management device 100. As mentioned above, as a result of the terminal-side display unit 220 displaying an operation screen, the tablet terminal device 200 functions as a terminal device of the valuable item management device 100.

Furthermore, the terminal-side display unit 220 corresponds to an example of a warning output unit, which outputs a warning (displays a warning message) in a case where the terminal-side operation input unit 230 receives a logout operation from the tablet terminal device 200 including the terminal-side display unit 220 itself, and the terminal-side storage unit 280 is storing information to be transmitted to the valuable item management device 100. That is to say, in a case where the user attempts to logout from the tablet terminal device 200 in a state where the terminal-side storage unit 280 is storing information that has not yet been transmitted to the valuable item management device 100, the terminal-side display unit 220 warns the user that there is information remaining that has not yet been transmitted.

The method for the tablet terminal device 200 outputting the warning indicating that there is information remaining that has not yet been transmitted is not limited to a message display on the terminal-side display unit 220. For example, the tablet terminal device 200 may include a speaker as a warning output unit, and the speaker may be made to output the warning indicating that there is information remaining that has not yet been transmitted, by means of an audio message. Alternatively, the information indicating that there is information remaining that has not yet been transmitted may be transmitted by the terminal-side communication unit 210 to another device. In this case, the terminal-side communication unit 210 corresponds to an example of the warning output unit.

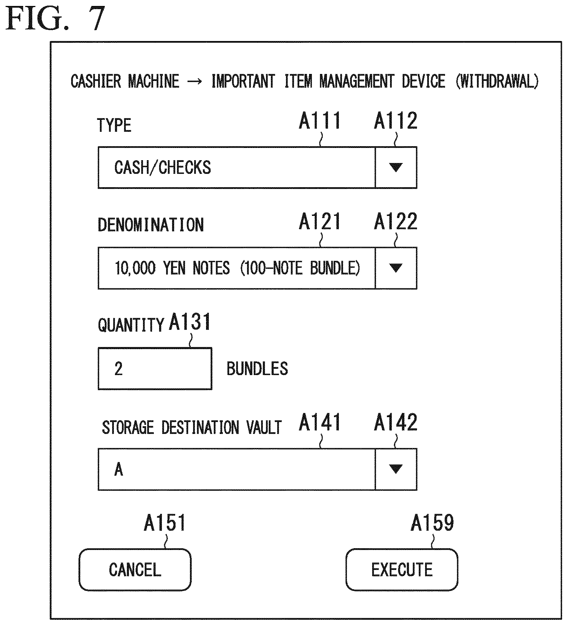

FIG. 7 is an explanatory view showing a first example of an operation screen displayed by the terminal-side display unit 220. FIG. 7 shows an example of an operation screen at a time where cash to be transferred from a cashier machine to an important item management device is removed from the cashier machine.

The region A111 in FIG. 7 is a field where a type, namely checks or cash, is input. The downward triangle (T) displayed in the region A112 is an operation region for displaying a type menu window. When the user performs an operation that selects the region A112 (by a touch operation on the region A112 for example), the terminal-side display unit 220 displays the type menu window. The user selects one of the items shown in the displayed menu window. In the example of FIG. 7, "cash/checks" is selected as the type.

The region A121 is a field where a denomination is input. The downward triangle displayed in the region A122 is an operation region for displaying a denomination menu window. When the user performs an operation that selects the region A122, the terminal-side display unit 220 displays the denomination menu window. The user selects one of the items shown in the displayed menu window. In the example of FIG. 7, "10,000 yen notes (100-note bundle)" is selected as the denomination.

The region A131 is a field where a quantity is input. Specifically, the user inputs in the region A131 the quantity of the selected denomination ("10,000 yen notes (100-note bundle)" displayed in the region A121) to be removed from the cashier machine. In the example of FIG. 7, "2" is input as the quantity.

Furthermore, the region A141 is a region where information representing the storage destination vault (a storage body of the important item management device in the example of FIG. 7) of the valuable item removed from the cashier machine is input. The downward triangle displayed in the region A142 is an operation region for displaying a valuable item storage destination menu window.

When the user performs an operation selecting the region A142, the terminal-side display unit 220 displays a valuable item storage destination menu window. The user then selects one of the items shown in the displayed menu window. In the example of FIG. 7, a vault A is selected as the valuable item storage destination.

Furthermore, the region A151 is a touch region in a case where an operation shown on the operation screen is to be canceled. If a user operation is performed that touches the region A151, the terminal-side display unit 220 returns to displaying the top menu screen for example.

In addition, the region A159 is a touch region in a case where an operation shown on the operation screen is to be executed. If a user operation is performed that touches the region A159, the valuable item management device 100 (the cashier machine 410 in the example of FIG. 7), which represents the operation subject, executes processing of the displayed content (set content).

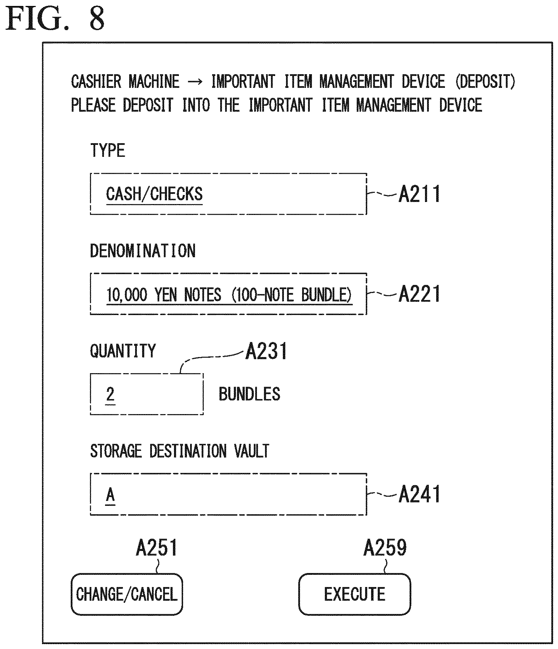

FIG. 8 is an explanatory view showing a second example of an operation screen displayed by the terminal-side display unit 220. FIG. 8 shows an example of an operation screen at a time where cash to be transferred from a cashier machine to an important item management device is deposited into the important item management device.

The screen in FIG. 8 displays an example of a case where the valuable item removed in the example of FIG. 7 is to be placed in the important item management device. Consequently, the type "cash/checks" displayed in the region A211 is the same as that displayed in the region A111 in FIG. 7. Furthermore, the denomination "10,000 yen notes (100-note bundles)" displayed in the region A221 also is the same as that displayed in the region A121. Moreover, the quantity information displayed in the region A231 is the same as that displayed in the region A131 in FIG. 7. Furthermore, the information for the storage destination vault displayed in the region A241 is the same as that displayed in the region A141 in FIG. 7.

In this manner, the screen displayed in FIG. 8 displays the information input in FIG. 7. Consequently, it is not necessary for the user to input information into the respective items. This aspect is able reduce the burden on a user.

The region A259 is, in the same manner as the region A159 in FIG. 7, a touch region in a case where an operation shown on the operation screen is to be executed. If a user operation is performed that touches the region A259, the valuable item management device 100 (the important item management device 450 in the example of FIG. 8) representing the operation subject executes processing of the displayed content (set content).

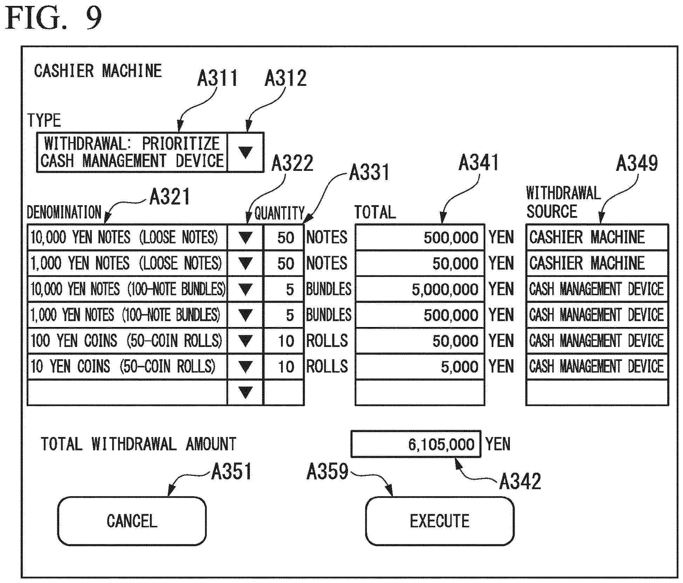

FIG. 9 is an explanatory view showing a third example of an operation screen displayed by the terminal-side display unit 220. FIG. 9 shows an example of an operation screen at a time where, with respect to withdrawal processing in the cashier machine 410, withdrawal of cash is performed not only by the cashier machine 410 but in a combination with the cash management device 440.

The region A311 in FIG. 9 is a field where a transaction type with respect to the cashier machine is selectively input. For example, the user selects in the region A311 any one of a withdrawal from only the cashier machine 410, a deposit into only the cashier machine 410, a composite deposit and withdrawal in which a withdrawal and a deposit with respect to the cashier machine 410 are simultaneously performed, and a deposit and withdrawal prioritized with respect to the cash management device 440. A deposit and withdrawal prioritized with respect to the cash management device 440 represents processing in which, at the time of a cash deposit and withdrawal, the deposit and the withdrawal of banknote bundles and/or coin rolls is performed giving priority to use of the cash management device 440, and the deposit and the withdrawal of less than 100 banknotes or less than 50 coins, which represent a type of denomination, is performed with respect to the cashier machine 410.

Here, the downward triangle (▼) shown in the region A312 is an operation region for displaying a type menu window. When the user performs an operation that selects the region A312 (by a touch operation on the region A312 for example), the terminal-side display unit 220 displays the type menu window. The user selects one of the items shown in the displayed menu window. In the example of FIG. 9, "withdrawal: prioritize cash management device" is selected as the type.

The region A321 is a field where a denomination is input. The downward triangle displayed in the region A322 is an operation region for displaying a denomination menu window. When the user performs an operation that selects the region A322, the terminal-side display unit 220 displays the denomination menu window. The user selects one of the items shown in the displayed menu window.

In the example of FIG. 9, shown is an example where "10,000 yen notes (loose banknotes)" is selected as a first denomination, "1,000 yen notes (loose banknotes)" is selected as a second denomination, "10,000 yen notes (100-note bundle)" is selected as a third denomination, and in the same manner thereafter "10 yen coins (50-coin roll)" is selected as a sixth denomination.

Further, if necessary, an empty input field is prepared such that a seventh denomination may be selected. If a seventh denomination is selected and, as mentioned below, a quantity is input such that the information related to the seventh denomination becomes confirmed, then an empty input field is additionally displayed such that an eighth denomination may be selected. However, the configuration of the input field is in no way limited to this example.

The region A331 is a field where a quantity is input. Specifically, after the user selects a denomination ("10,000 yen notes (loose banknotes)" as displayed first in the region A321), a quantity of the selected denomination is then input into the region A331 by performing a touch operation on a numeric keypad (not shown in the figure), which is displayed on the operation screen on the terminal-side display unit 220. In the example of FIG. 9, "50" is input as the quantity.

In the same manner, when the second denomination in the region A321 is selected, the quantity of the "1000 yen notes (loose banknotes)" as displayed second in the region A321 is input in the second region A311, and in the same manner thereafter the quantity of the "10 yen coins (50-coin rolls)" is input with respect to the sixth region A331.

Here, on the right side of the region A331 in which the quantity is input, is displayed "counts", "bundles", and "rolls". The type of display thereof changes depending on the denomination input in the region A321. The display thereof automatically changes to "counts" for loose banknotes or loose coins, to "bundles" for 100-note bundles of banknotes, or to "rolls" for 50-coin rolls of coins.

A region A341 is provided on the right side of the region A331, in which a set total is automatically calculated and displayed according to the respective denominations and quantities.

A region A342 is provided on the lower side of the regions A341, and displays a total amount of the respective set totals that have been automatically calculated. In the example of FIG. 9, a total amount of the withdrawal totals is displayed in the region A342.

The right side of the region A341, in which the set total values according to the respective denominations and quantities are displayed, is provided with a region A349 that automatically displays from which of the devices withdrawal of the banknotes and/or coins corresponding to the total values is to be performed.

That is to say, from the information of the transaction type set in the region A311, which is "withdrawal: prioritize cash management device" in the example of FIG. 9, and the denomination information set in the region A321, it is automatically determined and displayed from which of the devices withdrawal of the cash of the set denominations is to be performed.

In the example of FIG. 9, since the first denomination in the region A321 is "10,000 yen notes (loose banknotes)", the "cashier machine 410" that handles deposits and withdrawals of loose banknotes is automatically displayed in the first region A349 as the withdrawal source device.

Next, since the second denomination in the region A321 is "1,000 yen notes (loose banknotes)", the "cashier machine 410" that handles deposits and withdrawals of loose banknotes is similarly displayed in the second region A349 as the withdrawal source device.

In contrast, since the third denomination in the region A321 is "10,000 yen notes (100-note bundles)" and the transaction type set in the region A311 is "withdrawal: prioritize cash management device", the "cash management device 440" that handles deposits and withdrawals of bundled banknotes is displayed in the third region A349 as the withdrawal source device.

Thereafter, in the same manner, since the sixth denomination in the region A321 is "10 yen coins (50-coin rolls)" and the transaction type set in the region A311 is "withdrawal: prioritize cash management device", the "cash management device 440" that handles deposits and withdrawals of coin rolls is displayed in the sixth region A349 as the withdrawal source device.

Here, although not particularly shown, if the transaction type set in the region A311 is "withdrawal: prioritize cashier machine" rather than "withdrawal: prioritize cash management device", and the cashier machine 410 has, as shown in FIG. 2, a bundle withdrawal unit 433 and a coin roll withdrawal unit 438, then even if the denomination of the third region A321 shown in the example of FIG. 9 is "10,000 yen notes (100-note bundles)", the withdrawal device thereof is set as the "cashier machine 410" from which the withdrawal of bundled banknotes is possible.

In the same manner, even if the denomination of the sixth region A321 in the example of FIG. 9 is "10 yen coins (50-coin rolls)", the withdrawal device thereof is set as the "cashier machine 410" from which the withdrawal of coin rolls is possible.

If the bundle withdrawal unit 433 or the coin roll withdrawal unit 438 of the cashier machine 410 is such that the number of bundles or the number of coin rolls that can be withdrawn is insufficient, the terminal-side display unit 220 may perform a display that prompts the user to change the withdrawal setting.

For example, the cashier machine 410 detects the stored quantities of loose banknotes, banknote bundles, loose coins, and coin rolls that are stored within the main body 421 of the banknote processing device 411 and the main body of the coin processing device 413. Therefore, the tablet terminal device 200 or the cashier machine 410 is able to determine beforehand whether or not the withdrawal is possible by comparing the withdrawal quantity setting exemplified by the region A331 in FIG. 9 and the stored quantities of the cashier machine 410. If withdrawal of the set quantities from the cashier machine 410 is not possible, the tablet terminal device 200 displays on the operation screen of the terminal-side display unit 220 a message indicating that the withdrawal is not possible, and prompts the user to change the quantities. Alternatively, the tablet terminal device 200 may, based on a user authentication operation, change the withdrawal from the cashier machine 410 to a withdrawal from the cash management device 440 for only the insufficient denomination.

The region A351 is a touch region in a case where an operation shown on the operation screen is to be canceled. If a user operation is performed that touches the region A351, the terminal-side display unit 220 returns to the top menu screen for example.

In addition, the region A3 59 is a touch region in a case where an operation shown on the operation screen is to be executed. If a user operation is performed that touches the region A359, the valuable item management device 100 (the cashier machine 410 in the example of FIG. 9), which represents the operation subject, executes processing of the displayed content (set content).

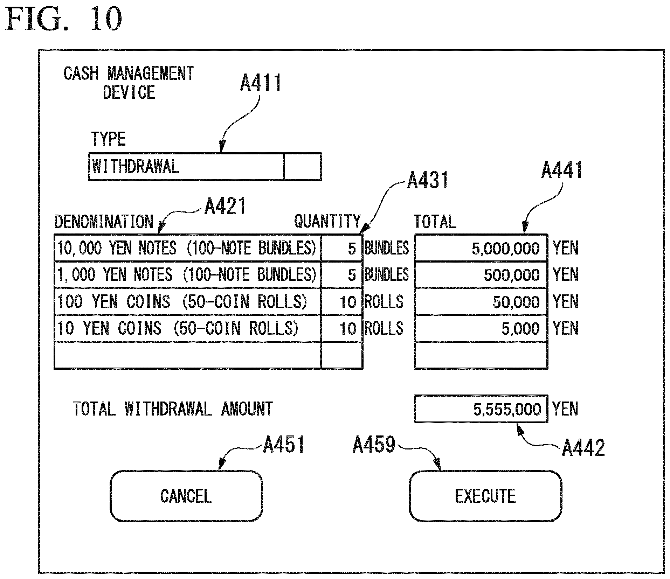

FIG. 10 is an explanatory view showing a fourth example of an operation screen displayed by the terminal-side display unit 220. FIG. 10 shows an example of an operation screen at a time where processing is executed with respect to the portion of processing that was not completed from only cash deposits and withdrawals with respect to the cashier machine 410, that is to say, with respect to the portion of the deposits and withdrawals set in the cashier machine 410 in which processing with respect to the cash management device 440 has been set.

As described above, in FIG. 9, processing that is executed in the cashier machine 410 and processing that is executed in the cash management device 440 are set. Generally, the portion of the processing that is executed in the cash management device 440 is processed immediately following the processing with respect to the cashier machine 410. Therefore, after completion of the processing to be executed in the cashier machine 410, the user moves to the cash management device 440 and execute the processing exemplified by FIG. 10.

The screen in FIG. 10 shows an example of the processing portion set beforehand in the cashier machine 410 in the example of FIG. 9 to be executed in the cash management device 440. Consequently, the type "withdrawal" shown in the region A411 is showing essentially the same content as the display of region A311 in FIG. 9. Furthermore, the denomination "10,000 yen notes (100-note bundles)" shown in the first region A421 is also the same as the display shown in the third region A321. The quantity information shown in the first region A431 is the same as the display shown in the third region A331 in FIG. 9. In the same manner, the denomination "1,000 yen notes (100-note bundles) shown in the second region A421 is also the same as the display shown in the fourth region A321. The quantity information shown in the second region A431 is the same as the display shown in the fourth region A331 in FIG. 9. The denomination "10 yen coins (50-coin rolls)" shown in the fourth region A421 is also the same as the display shown in the sixth region A321. The quantity information shown in the fourth region A431 is the same as the display shown in the sixth region A331 in FIG. 9.

On the right side of the region A431 in which the quantity is displayed, is displayed "bundles" and "rolls". The type of display thereof changes depending on the denomination displayed in the region A421. The display thereof automatically changes to "bundles" for 100-note bundles of banknotes, or to "rolls" for 50-coin rolls of coins.

In addition, a region A441 is provided on the right side thereof, in which a set total is automatically calculated and displayed according to the respective denominations and quantities.

Furthermore, the lower side of the regions A441 is provided with a region A442 that displays a total amount of the respective set totals that has been automatically calculated. In the example of FIG. 10, a total amount of the withdrawal totals from the cash management device 440 is displayed in the region A442.

In this manner, among the information input in FIG. 9, all of the information to be processed by the cash management device 440 is displayed in the screen shown in FIG. 10. Consequently, it is not necessary for the user to input information into the respective items. This aspect is able to reduce the burden on a user.

As described in the example of FIG. 9, a case exists where, depending on the input content, namely the transaction type in the cashier machine input in the region A311 and the denomination information input in the region A321, the device set as the deposit and withdrawal device may be limited to only the cash management device 440, which performs deposits and withdrawals of only banknote bundles and/or coin rolls.

Here, as described above, the cashier machine 410 manages currency processing of the whole branch where it is installed. The user manages, by means of the tablet terminal device 200, the input data of the cash management device 440, which supplements the processing in the cashier machine 410 by performing deposits and withdrawals of banknote bundles and/or coin rolls, while also inputting the information necessary for the processing with respect to the cash management device 440. In this manner, the user is able to collectively perform by means of the tablet terminal device 200, the management and the operation of the cashier machine 410 and the management and the operation of the cash management device 440. This aspect is able to reduce the burden on a user.

The terminal-side operation input unit 230 includes an input device such as a touch sensor that configures a touch panel provided in the display screen of the terminal-side display unit 220, and receives a user operation for example. In particular, the terminal-side operation input unit 230 receives a user operation with respect to the valuable item management device 100. Specifically, if the user performs an operation with respect to the valuable item management device 100 on the operation screen in a state where an operation screen for operating the valuable item management device 100 is displayed, the terminal-side operation input unit 230 receives the operation.

The image capturing unit 240 includes a camera, and performs image capture. In particular, the image capturing unit 240 captures a face image of a user. The face image of the user captured by the image capturing unit 240 is used in face recognition of the user.

The terminal-side storage unit 280 includes a storage device provided to the tablet terminal device 200, and stores various data. In particular, the terminal-side storage unit 280 stores information that is transmitted to the valuable item management device 100 (information for making the valuable item management device 100 perform an operation), which performs an operation related to an operation with respect to the valuable item management device 100 to which the terminal-side communication unit 210 is communicatively connected. For example, when an input operation is performed with respect to the operation screen shown in FIG. 7, the terminal-side storage unit 280 stores the information shown in FIG. 8. The information shown in FIG. 7 corresponds to an example of information transmitted to a cashier machine. The information shown in FIG. 8 corresponds to an example of information transmitted to an important item management device.

Furthermore, the terminal-side storage unit 280 stores permission information for each user that represents the valuable item management device 100 that the user is able to operate. The permission information is used to determine whether or not the terminal-side communication unit 210 and the valuable item management device 100 are to be communicatively connected.

The processor-side storage unit 180 may also be made to store the permission information in place of the terminal-side storage unit 280.

The terminal-side control unit 290 controls the respective units of the tablet terminal device 200, and executes various functionalities. The terminal-side control unit 290 is realized for example by a CPU provided to the tablet terminal device 200, reading out a program from the terminal-side storage unit 280, and then executing it.

The terminal-side user authentication unit 291 performs face recognition of the user based on the face image captured by the image capturing unit 240. The authentication processing performed by the terminal-side user authentication unit 291 is in no way limited to face recognition. For example, the terminal-side user authentication unit 291 may be made to perform password authentication. Alternatively, the tablet terminal device 200 may include a fingerprint reader device, and the terminal-side user authentication unit 291 may be made to perform fingerprint authentication.

The device connection unit 292 determines whether or not the terminal-side communication unit 210 and the valuable item management device 100 are to be communicatively connected. Specifically, if the terminal-side communication unit 210 has a valuable item management device 100 to which it can communicatively connect, the device connection unit 292 refers to the permission information stored in the terminal-side storage unit 280. Therefore, if it is determined that the user of the tablet terminal device 200 has permission to access the valuable item management device 100, the device connection unit 292 communicatively connects the terminal-side communication unit 210 and the valuable item management device 100. On the other hand, if it is determined that the user of the tablet terminal device 200 does not have permission to access the valuable item management device 100, the device connection unit 292 inhibits the communication connection (does not communicatively connect) between the terminal-side communication unit 210 and the valuable item management device 100.

For example, in the case of a bank where there is a regulation with respect to which devices each clerk can operate, then as a result of the device connection unit 292 controlling whether or not a communication connection between the terminal-side communication unit 210 and the valuable item management device 100 is performed based on a user permission, it is possible to supplement the enforcement of the regulation. For example, if the equipment that a customer service clerk is able to operate is limited to customer service business equipment, the tablet terminal device 200 communicatively connects with customer service business equipment by means of control by the device connection unit 292, but it does not communicatively connect with other equipment.

The processing information acquisition unit 293 acquires information to be transmitted to the valuable item management device 100 based on a user operation received by the terminal-side operation input unit 230. For example, when the terminal-side operation input unit 230 receives a user operation with respect to a valuable item management device 100, to which the terminal-side communication unit 210 is permitted to communicatively connect and is communicatively connected, the processing information acquisition unit 293 generates information that represents the user operation. As a result of the terminal-side communication unit 210 transmitting the information to the valuable item management device 100, the valuable item management device 100 operates according to the user operation represented by the information.

The information acquired by the processing information acquisition unit 293 may be an operation instruction with respect to the valuable item management device 100, or it may be information such as a branch number, a machine number, a process serial number, operator information, and compartment information (a vault number, and the like), which become the processing parameters of the valuable item management device 100. Alternatively, the processing information acquisition unit 293 may be made to acquire an operation log to be stored in the valuable item management device 100.

Furthermore, the processing information acquisition unit 293 acquires information for making a valuable item management device 100 (hereinafter second valuable item management device) that performs processing related to the processing performed in the valuable item management device 100 (hereinafter first valuable item management device), to which the terminal-side communication unit 210 is communicatively connected, perform processing. The processing information acquisition unit 293 may be made to generate, based on a user operation with respect to the first valuable item management device, information for making the second valuable item management device perform processing related to the user operation. Alternatively, the first valuable item management device may operate based on a user operation, and it may be made to further generate information for making the second valuable item management device perform processing. In this case, the processing information acquisition unit 293 acquires the information generated by the first valuable item management device, and transmits the information to the second valuable item management device by controlling the terminal-side communication unit 210.

Furthermore, if an operation is performed with respect to a valuable item management device 100 to which the terminal-side communication unit 210 is not communicatively connected, the processing information acquisition unit 293 acquires (generates for example) information based on the operation with respect to the valuable item management device 100, and stores the acquired information in the terminal-side storage unit 280. In this case, when the terminal-side communication unit 210 is communicatively connected to the valuable item management device 100, it transmits the information to the valuable item management device 100 according to control by the terminal-side control unit 290.

In a case where the processing information acquisition unit 293 acquires information related to deposits and withdrawals with respect to both the first valuable item management device and the second valuable item management device, it may be made to divide the information into information related to deposits and withdrawals with respect to the first valuable item management device and deposits and withdrawals with respect to the second valuable item management device.

Here, the information shown in FIG. 9 includes withdrawal information from the cashier machine 410 and withdrawal information from the cash management device 440. The cashier machine 410 corresponds to an example of the first valuable item management device, and the cash management device 440 corresponds to an example of the second valuable item management device. The information shown in FIG. 9 corresponds to an example of information related to deposits and withdrawals with respect to both the first valuable item management device and the second valuable item management device.

The information shown in FIG. 10 represents information of a withdrawal from the cash management device 440. The information shown in FIG. 10 corresponds to an example of information related to deposits and withdrawals with respect to the second valuable item management device.

As a result of the processing information acquisition unit 293 dividing the information shown in FIG. 9 into information of a withdrawal from the cashier machine 410 and information of a withdrawal from the cash management device 440, it becomes possible to confirm that the entire withdrawal from the cashier machine 410 has been completed, and then display on the terminal-side display unit 220 information (the information in FIG. 10) related to the withdrawal from the cash management device 440.

In this manner, as a result of the processing information acquisition unit 293 dividing the information related to deposits and withdrawals with respect to both the first valuable item management device and the second valuable item management device, into information related to deposits and withdrawals with respect to the first valuable item management device and information related to deposits and withdrawals with respect to the second valuable item management device, it is possible to confirm that the entire deposit and withdrawal with respect to the first valuable item management device has been completed, and then prompt the user regarding the deposit and withdrawal with respect to the second valuable item management device.

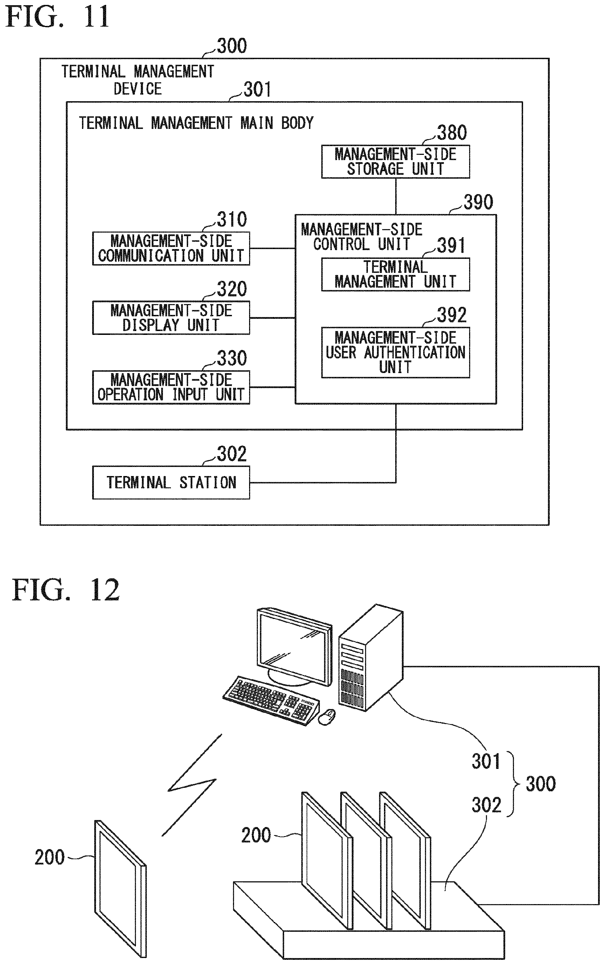

FIG. 11 is a schematic block diagram showing a functionality configuration of a terminal management device 300. As shown in FIG. 11, the terminal management device 300 includes a terminal management main body (terminal management device main body) 301 and a terminal station 302. The terminal management main body 301 includes a management-side communication unit (communication unit) 310, a management-side display unit (display unit) 320, a management-side operation input unit (operation input unit) 330, a management-side storage unit (storage unit) 380, and a management-side control unit (control unit) 390. The management-side control unit 390 includes a terminal management unit 391 and a management-side user authentication unit (user authentication unit) 392.

The terminal management main body 301 collectively manages information related to the tablet terminal device 200. In particular, the terminal management main body 301 collectively manages information related to the lending of the tablet terminal device 200. For example, at the time the tablet terminal device 200 is returned, the terminal management main body 301 reads out and stores information from the tablet terminal device 200. Consequently, the terminal management main body 301 is able to collectively manage information related to a plurality of tablet terminal devices 200.

The terminal management main body 301 is configured by using a personal computer for example.

The management-side communication unit 310 performs communication with the terminal-side communication unit 210.

The management-side display unit 320 includes a display screen such as a liquid-crystal panel or a LED panel, and displays various images for example.

The management-side operation input unit 330 includes for example an input device such as a keyboard and a mouse, and receives a user operation. In particular, the management-side operation input unit 330 corresponds to an example of a lending request acquisition unit, and receives a user operation representing a lending request of the tablet terminal device 200.

The management-side storage unit 380 includes a storage device provided to the terminal management device 300, and stores various information. In particular, the management-side storage unit 380 stores user information that associates the tablet terminal device 200 and the users that are able to use the tablet terminal device 200.

The management-side control unit 390 controls each of the units of the terminal management device 300 and executes various functionalities. The management-side control unit 390 is realized for example by a CPU provided to the terminal management device 300, reading out a program from the management-side storage unit 380, and then executing it.

When the information representing the lending request acquired by the management-side operation input unit 330 matches the information detected with respect to the usage permission condition of the terminal device for which there is a lending request, the terminal management unit 391 makes the terminal device for which there is a lending request a usable state. For example, the user inputs from the management-side operation input unit 330 a lending request by specifying the tablet terminal device 200 to be used and the user that is to use the tablet terminal device 200. Then, the terminal management unit 391 reads out from the lending request, information of the user that is to use the tablet terminal device 200, and performs a setting such that the tablet terminal device 200 (user authentication unit 291) performs face recognition of the user.

If the user authentication succeeds, the tablet terminal device 200 begins operation as a terminal device of the valuable item management device 100. On the other hand, if user authentication fails, the tablet terminal device 200 places the tablet terminal device 200 itself in a locked state. If the tablet terminal device 200 is in a locked state, the user is unable to use the tablet terminal device 200.

Furthermore, if the terminal management unit 391 acquires a lending request of the tablet terminal device 200 from the user, it refers to user information stored in the management-side storage unit 380 and selects as the tablet terminal device 200 representing the lending subject, a tablet terminal device 200 that the user is able to use, based on the user information.

Moreover, if the terminal management unit 391 acquires a lending request of the tablet terminal device 200, and the acquired lending request includes information indicating the valuable item management device representing the operation subject, the terminal management unit 391 stores in the tablet terminal device an operation program for operating the valuable item management device 100 representing the operation subject. Further, the terminal management unit 391 selects as the terminal device representing the lending subject, the tablet terminal device 200 in which the operation program has been stored.

In a case where a loaned tablet terminal device 200 is returned, the terminal management unit 391 stores the information stored in the terminal-side storage unit 280 of the tablet terminal device 200, in the management-side storage unit 380.

Furthermore, in a case where a loaned tablet terminal device 200 is returned, the terminal management unit 391 deletes the operation history information stored in the tablet terminal device 200.

Moreover, the combination of the terminal management unit 391 and the management-side display unit 320 corresponds to an example of a warning output unit. Specifically, when the terminal management unit 391 determines that an estimated time of return that has been set with respect to the loaned tablet terminal device 200 has arrived and determines that the tablet terminal device 200 has not been returned, then the management-side display unit 320 displays a message (outputs a warning) indicating that there is a tablet terminal device 200 whose return is delayed.

However, the method in which the terminal management device 300 outputs the warning indicating that there is a tablet terminal device whose return is delayed, is in no way limited to displaying a message by means of the management-side display unit 320. For example, the terminal management device 300 may include a speaker, and a warning indicating that there is a tablet terminal device 200 whose return is delayed may be output from the speaker by means of an audio message. In this case, the combination of the terminal management unit 391 and the speaker corresponds to an example of the warning output unit. Alternatively, information indicating that there is a tablet terminal device 200 whose return is delayed may be transmitted to another device by the management-side communication unit 310. In this case, the combination of the terminal management unit 391 and the management-side communication unit 310 represents an example of the warning output unit.

The management-side user authentication unit 392 performs user authentication processing. For example, the image capturing unit 240 of the tablet terminal device 200 captures a face image of the user, and the terminal-side communication unit 210 transmits an authentication request including the face image to the management-side control unit 390. In the management-side control unit 390, the management-side user authentication unit 392 performs face recognition according to the authentication request.

The authentication performed by the management-side user authentication unit 392 is in no way limited to face recognition. For example, the management-side user authentication unit 392 may be made to perform password authentication. Alternatively, the tablet terminal device 200 may include a fingerprint reader device, and the terminal-side user authentication unit 291 may be made to perform fingerprint authentication.

Integration may be performed with respect to either of the terminal-side user authentication unit 291 and the management-side user authentication unit 392. That is to say, only one of the terminal-side user authentication unit 291 and the management-side user authentication unit 392 may be provided.

Furthermore, the user operation requesting authentication may be acquired by either one of the tablet terminal device 200 and the terminal management device 300. The authentication information may be acquired by either one of the tablet terminal device 200 and the terminal management device 300. For example, in a case where the terminal management device 300 includes a camera, when an authentication request operation is received by the management-side operation input unit 330, face recognition may be performed by capturing a face image of the user with the camera.

The terminal station 302 accommodates the tablet terminal device 200. The terminal station 302 performs recharging of the tablet terminal device 200 when in a state where the tablet terminal device 200 is accommodated.

FIG. 12 is an explanatory view showing an example of an external form of the terminal management device 300. As shown in FIG. 12, the terminal station 302 accommodates the tablet terminal device 200.

Furthermore, the terminal station 302 and the terminal management main body 301 are connected by a wire. The terminal management main body 301 is able to rewrite the data stored in the terminal-side storage unit 280 of the tablet terminal device 200 accommodated in the terminal station 302.

The terminal station 302 is not essential to the configuration of the valuable item management system 1. For example, the terminal management device 300 may grasp the state of the tablet terminal device 200 by exchanging information with the tablet terminal device 200 by wireless communication.

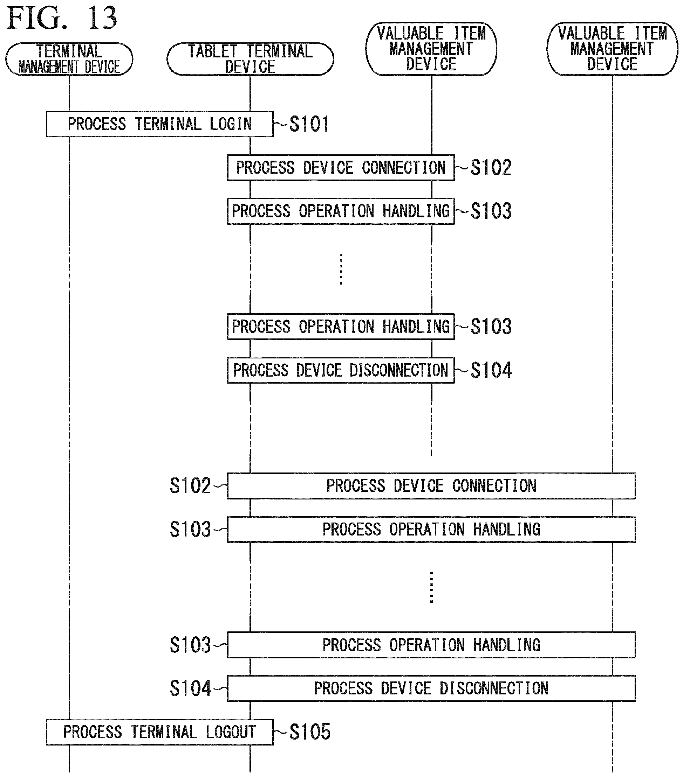

Next, an operation of the valuable item management system 1 is described with reference to FIG. 13 to FIG. 18.

FIG. 13 is an explanatory view showing an operation of the valuable item management system 1.

In the processing in FIG. 13, the terminal management device 300 and the tablet terminal device 200 perform login processing with respect to the tablet terminal device 200 (step S101).

Then, the tablet terminal device 200 and the valuable item management device 100 perform device connection processing with respect to the valuable item management device 100 (step S102).

As mentioned above, in particular, as a result of the processor-side communication unit 110 connecting with the tablet terminal device 200 via a short-distance wireless communication, the user is able to select the valuable item management device 100 that is to be communicatively connected with the tablet terminal device 200 by a simple operation of bringing the tablet terminal device 200 close to the valuable item management device 100. Alternatively, the processor-side communication unit 110 may include a connection terminal that performs a wired connection with the tablet terminal device 200, and may be made to communicatively connect by wire with the tablet terminal device 200 connected to the connection terminal.

If the tablet terminal device 200 becomes a state where it is able to connect to a plurality of valuable item management devices 100, the terminal-side display unit 220 may be made to display a selection operation screen of the valuable item management devices 100 for example. Then, the tablet terminal device 200 may be communicatively connected with the valuable item management device 100 selected by the user.

The valuable item management device 100 and the tablet terminal device 200 may be communicatively connected one-to-one. Consequently, it is possible to avoid a situation in which the valuable item management device 100 simultaneously receives operations from a plurality of tablet terminal devices 200, and becomes unable to perform the appropriate processing.

When in a state where the valuable item management device 100 and the tablet terminal device 200 are communicatively connected, the operation input unit of the valuable item management device 100 may be made inactive (that is to say, it may be made to not accept operations). Consequently, it is possible to avoid a situation in which the valuable item management device 100 simultaneously receives operations from the operation input unit of the valuable item management device 100 and the tablet terminal device 200, and becomes unable to perform the appropriate processing.

Following step S102, the tablet terminal device 200 and the valuable item management device 100 repeat the processing of handling an operation with respect to the valuable item management device 100 received by the terminal-side operation input unit 230 of the tablet terminal device 200 (step S103). The repetition frequency of step S103 may be an arbitrary frequency. That is to say, the tablet terminal device 200 and the valuable item management device 100 execute the processing of step S103 zero times or more. The processing of step S103 zero times assumes a case where device connection processing with respect to the valuable item management device 100 is performed, but disconnection processing is immediately necessary due to urgent business, and the like.

When handling of the user operation is completed, the tablet terminal device 200 and the valuable item management device 100 perform disconnection processing from the valuable item management device 100 (step S104).

The processing of steps S102 to S104 is also repeatedly performed in the other valuable item management devices 100. The repetition frequency of steps S102 to S104 may also be an arbitrary frequency.

Then, the terminal management device 300 and the tablet terminal device 200 perform logout processing from the tablet terminal device 200 (step S105).

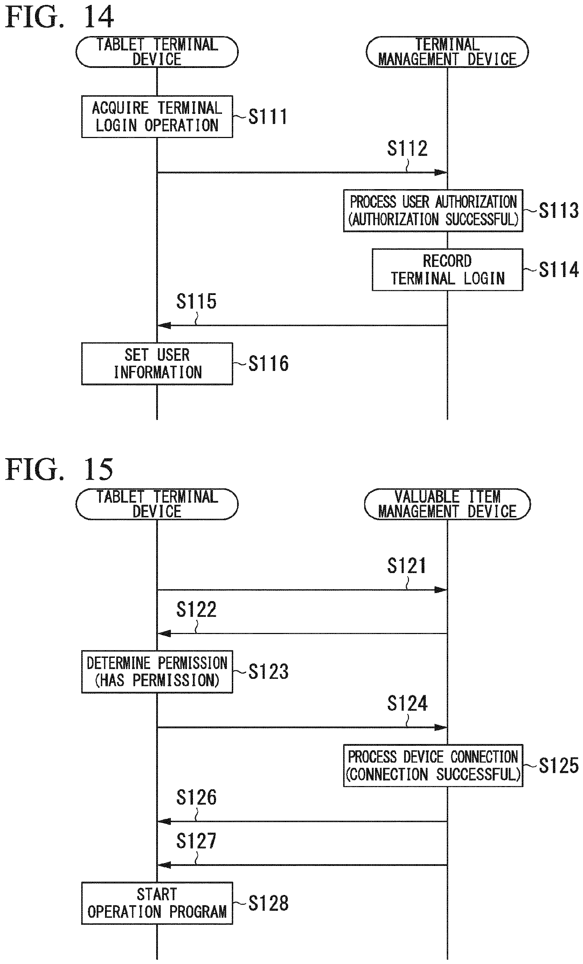

FIG. 14 is an explanatory view showing an example of a processing sequence in which the terminal management device 300 and the tablet terminal device 200 perform login processing of a user with respect to the tablet terminal device 200. The terminal management device 300 and the tablet terminal device 200 perform the processing in FIG. 14 in step S101 in FIG. 13.

In the processing in FIG. 14, the terminal-side operation input unit 230 receives a user operation (authentication request operation) requesting to login with respect the tablet terminal device 200 (step S111).

Then, the terminal-side communication unit 210 transmits an authentication request to the terminal management device 300 (step S112: Request Authorization).

In the terminal management device 300, the management-side user authentication unit 392 performs user authentication (step S113).

The login operation with respect to the tablet terminal device 200 (user operation requesting login) and the authentication information may both be acquired by either the tablet terminal device 200 or the terminal management device 300. Furthermore, either the management-side user authentication unit 392 of the terminal management device 300 or the terminal-side user authentication unit 291 of the tablet terminal device 200 may be made to perform user authentication.

For example, the user may perform login processing in the terminal management device 300 and register the tablet terminal device 200 that is taken out. Further, the terminal management device 300 may switch on the power of the registered tablet terminal device 200 when the user authentication is successful, and then store the necessary information (a user ID and authentication information for example) in the tablet terminal device 200.

In step S113, when the management-side user authentication unit 392 succeeds in the user authentication, the management-side storage unit 380 stores according to the control of the management-side control unit 390, a login record that specifies the user, the terminal device, and the date and time of the login (step S114).

Then, the management-side communication unit 310 transmits user information and a notification indicating that authentication was successful, to the tablet terminal device 200 (step S115: Notify Authorization Success, User Information). For example, the management-side storage unit 380 stores the user information such as a user ID (Identifier, identifying information). Further, the management-side user authentication unit 392 reads out the user information from the management-side storage unit 380, and the management-side communication unit 310 transmits an authentication result containing the user information.

In the tablet terminal device 200, setting of the user information is performed based on the user information transmitted by the management-side communication unit 310 (step S116). Specifically, the user information transmitted by the management-side communication unit 310 is stored in the terminal-side storage unit 280 according to control by the device connection unit 292.

In step S113, if the management-side user authentication unit 392 fails the user authentication, the management-side user authentication unit 392 transmits a notification indicating that authentication failed, to the tablet terminal device 200. In the tablet terminal device 200, the terminal-side display unit 220 displays a message based on the notification indicating that the authentication failed. In addition, the terminal-side display unit 220 displays a message prompting the user operation requesting login in step S111 to be performed again.

FIG. 15 is an explanatory view showing an example of a sequence in which the tablet terminal device 200 and the valuable item management device 100 perform device connection processing with respect to the valuable item management device 100. The tablet terminal device 200 and the valuable item management device 100 perform the processing in FIG. 15 in step S102 in FIG. 13.

In the processing in FIG. 15, the terminal-side communication unit 210 transmits a signal that searches for devices with which it can communicate (step S121: Search for Device).

In the valuable item management device 100 that receives the search signal from the terminal-side communication unit 210, the processor-side communication unit 110 transmits a response to the search signal (step S122: Respond to Search). Here, the processor-side communication unit 110 adds identifying information of the valuable item management device 100 in the response to the search signal.

In the tablet terminal device 200 that receives the search response, the device connection unit 292 determines if an access permission exists with respect to the valuable item management device 100 from which there was a response (step S123). Specifically, the device connection unit 292 reads out permission information (information indicating for each user the valuable item management devices 100 that the user is able to operate) from the terminal-side storage unit 280. Then, the device connection unit 292 determines whether or not the valuable item management device 100 from which there was a response is able to be operated by the user (whether or not an access permission exists).

In the example of FIG. 15, the device connection unit 292 determines that the valuable item management device 100 from which there was a response is able to be operated by the user. On the other hand, if it is determined that the valuable item management device 100 from which there was a response is unable to be operated by the user, the tablet terminal device 200 returns to step S121, and searches for another device.

The device connection unit 292 determined as having an access permission, transmits to the terminal-side communication unit 210 a connection request with respect to the valuable item management device 100 from which there was a response (step S124: Request Connection).

In the valuable item management device 100 that receives the connection request in step S124, the connection management unit 191 performs device connection processing (step S125). Since the access permission has been confirmed in step S123, device connection is successful in step S125.

The connection management unit 191 in which device connection was successful controls the processor-side communication unit 110 and transmits a connection success notification (a notification indicating that device connection was successful) to the tablet terminal device 200 (step S126: Notify Connection Success).

Further, the operation program transmission processing unit 192 reads out from the processor-side storage unit 180, an operation program (a program that makes the tablet terminal device 200 function as a terminal device of the valuable item management device 100), and controls the processor-side communication unit 110 to transmit the operation program to the tablet terminal device 200 (step S127: Operation Program).

In the tablet terminal device 200 that receives the operation program, the received operation program is temporarily stored in the terminal-side storage unit 280, and then the processing information acquisition unit 293 executes the operation program (step S128). Consequently, the tablet terminal device 200 functions as a terminal device of the valuable item management device 100.

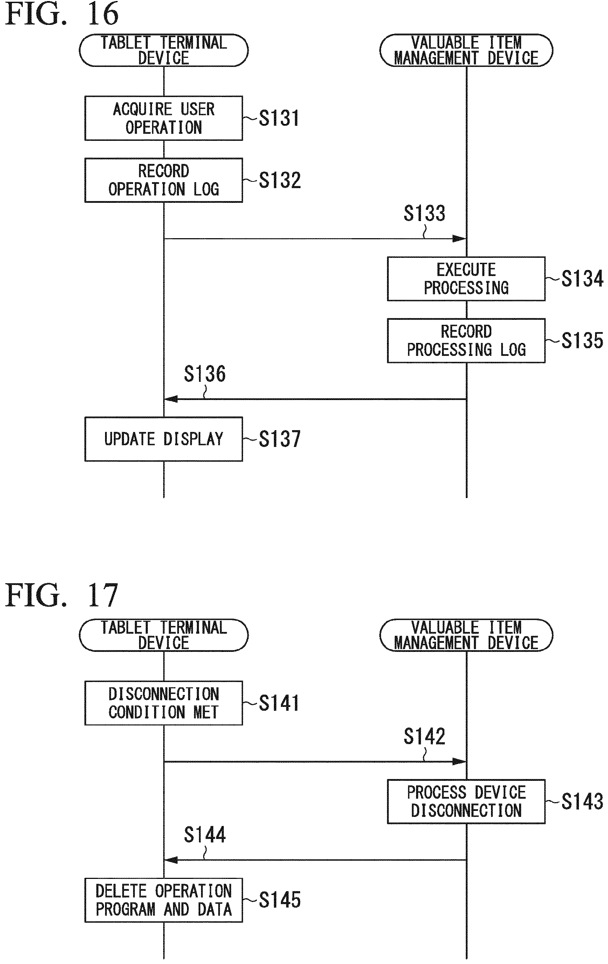

FIG. 16 is an explanatory view showing an example of a processing sequence in which the tablet terminal device 200 and the valuable item management device 100 handle an operation with respect to the valuable item management device 100 received by the terminal-side operation input unit 230. The tablet terminal device 200 and the valuable item management device 100 perform the processing in FIG. 16 in step S103 in FIG. 13.

In the processing in FIG. 16, the terminal-side operation input unit 230 has received a user operation with respect to the valuable item management device 100 (step S131).

Then, the processing information acquisition unit 293 stores a log of the user operation in step S131 in the terminal-side storage unit 280 (step S132).

Furthermore, the processing information acquisition unit 293 controls the terminal-side communication unit 210 to transmit an operation notification (information indicating the user operation that was performed) to the valuable item management device 100 (step S133: Notify Operation). The operation notification corresponds to an example of information for making the valuable item management device 100 perform processing.

In the valuable item management device 100 that receives the operation notification, the processing execution unit 193 executes the processing that was notified by means of the operation notification (step S134).

Then, the processing execution unit 193 stores a log of the processing executed in step S134, in the processor-side storage unit 180 (step S135).

Furthermore, the processing execution unit 193 controls the processor-side communication unit 110 to transmit a processing result notification to the tablet terminal device 200 (step S136: Notify Processing Result). The processing result notification referred to here is information that indicates the result of the processing executed in step S 134. The processing result notification indicates either that processing was completed, or that an error occurred. Moreover, if the processing executed in step S134 is accompanied by a change in a value such as in a numerical calculation, then the value thereof is further indicated.

In the tablet terminal device 200 that receives the processing result notification, the processing information acquisition unit 293 updates, based on the processing result notification, the operation screen display that is displayed on the terminal-side display unit 220 (step S137).

As described with reference to FIG. 13, the tablet terminal device 200 is able to perform the processing in FIG. 16 with respect to a plurality of valuable item management devices 100. At that time, the processing information acquisition unit 293 is able to acquire information based on a user operation with respect to a first unit of a valuable item management device 100 (hereinafter first valuable item management device), for making second and subsequent units of valuable item management devices 100 (hereinafter second valuable item management device) perform processing.

For example, if the terminal-side operation input unit 230 receives a user operation instructing the transfer of cash from the first valuable item management device to the second valuable item management device that indicates a transfer total, the processing information acquisition unit 293 generates, based on the user operation, information (first information) indicating that withdrawal processing from the first valuable item management device is to be performed, and a withdrawal amount that is equal to the transfer amount. Furthermore, the processing information acquisition unit 293 generates, based on the user operation, information (second information) indicating that deposit processing into the second valuable item management device is to be performed, and a deposit amount that is equal to the transfer amount.

The second information is transmitted by the terminal-side communication unit 210 to the second valuable item management device, and the second valuable item management device performs processing based on the information. For example, the second valuable item management device automatically unlocks the door lock of the vault in order to receive the deposit.

In this manner, the processing information acquisition unit 293 acquires the second information, and the second valuable item management device operates based on the second information. Therefore, a burden in which the user inputs an operation with respect to the second valuable item management device can be reduced.

FIG. 17 is an explanatory view showing an example of a sequence in which the tablet terminal device 200 and the valuable item management device 100 perform device disconnection processing from the valuable item management device 100. The tablet terminal device 200 and the valuable item management device 100 perform the processing in FIG. 17 in step S104 in FIG. 13.

In the processing in FIG. 17, the processing information acquisition unit 293 determines whether or not a condition in which disconnection from the valuable item management device 100 is performed is met (step S141). Examples of the condition in which disconnection from the valuable item management device 100 is performed include a user operation instructing disconnection has been performed, and the completion of all operations to be performed with respect to the valuable item management device 100 to which it is connected. In the example of FIG. 17, the processing information acquisition unit 293 determines that the condition has been met. In a case where it is determined that the condition is not met, the processing information acquisition unit 293 awaits for either the acquisition of a user operation in step S131 in FIG. 16, or for the condition in which disconnection is performed in step S141 in FIG. 17 to be met.

The processing information acquisition unit 293 that has determined that the condition is met in step S141 controls the terminal-side communication unit 210 and transmits a disconnection request (a signal requesting execution of disconnection processing from the valuable item management device 100) to the valuable item management device 100 (step S142: Request Disconnection).

In the valuable item management device 100 that receives the disconnection request, the connection management unit 191 executes disconnection processing from the valuable item management device 100 (step S143).

When disconnection processing is completed, the connection management unit 191 controls the processor-side communication unit 110 to transmit a disconnection completion notification (a signal that notifies that disconnection has been completed) to the tablet terminal device 200 (step S144: Notify Disconnection Completion).

In the tablet terminal device 200 that receives the disconnection completion notification, the device connection unit 292 deletes the operation program and data that accompanies operation with respect to the valuable item management device 100 (step S145).

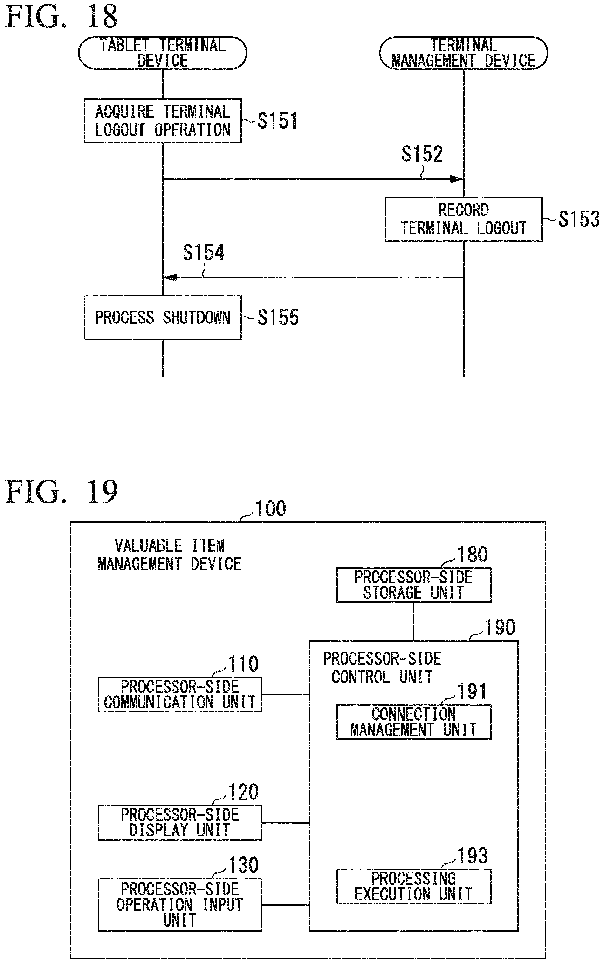

The information (such as transaction information, operation information, and fault information) notified to the terminal management device 300 in step S153 (FIG. 18) mentioned below is not deleted in step S145 and is preserved. Alternatively, the tablet terminal device 200 may, according to control by the terminal management device 300 in step S153, collectively delete the information.

FIG. 18 is an explanatory view showing an example of a sequence in which the terminal management device 300 and the tablet terminal device 200 perform logout processing of a user from the tablet terminal device 200. The terminal management device 300 and the tablet terminal device 200 perform the processing in FIG. 18 in step S105 in the FIG. 13.

In the processing in FIG. 18, the terminal-side operation input unit 230 has received a user operation instructing logout from the tablet terminal device 200 (step S 151). Either the terminal-side operation input unit 230 of the tablet terminal device 200, or the management-side operation input unit 330 of the terminal management device 300 may be made to receive the logout operation (a user operation instructing logout). Alternatively, an operation in which the user sets the tablet terminal device 200 on the terminal station 302, may be determined by the terminal management unit 391 as the logout operation.

When the terminal-side operation input unit 230 receives the logout operation in step S151, the terminal-side communication unit 210 transmits a logout notification to the terminal management device 300 (step S152: Notify Logout). The logout notification referred to here represents a signal that notifies that the user has performed logout from the tablet terminal device 200. Since the usage state of the terminals is collectively managed by the terminal management device 300, logout notification is performed from the tablet terminal device 200 with respect to the terminal management device 300.

In the terminal management device 300 that receives the logout notification, a record that specifies the user, the terminal device, and the date and time of the logout is stored in the management-side storage unit 380 (step S153). Furthermore, the terminal management device 300 reads out from the terminal-side storage unit 280 of the tablet terminal device 200, information such as transaction information, operation information, and fault information, and stores it in the management-side storage unit 380. Consequently, the terminal management device 300 collectively manages information related to a plurality of tablet terminal devices 200.

Further, the terminal management device 300 (in particular, the terminal management unit 391) controls the tablet terminal device 200 and deletes the information that has already been read out from the terminal-side storage unit 280. Consequently, the tablet terminal device 200 is initialized.

Then, the management-side communication unit 310 transmits a recording completion notification (a signal that indicates recording has completed), to the tablet terminal device 200 (step S154: Notify Recording Completion).

The tablet terminal device 200 that receives the recording completion notification performs shutdown of the tablet terminal device 200 itself (step S 155).

In the manner above, if a communication connection between the tablet terminal device 200 that includes the terminal-side display unit 220 itself and the valuable item management device 100 is permitted, the terminal-side display unit 220 displays an operation screen for operating the valuable item management device 100. Further, the terminal-side operation input unit 230 receives a user operation with respect to the valuable item management device 100. In addition, the processing information acquisition unit 293, based on the user operation received by the terminal-side operation input unit 230, acquires information (information for making the valuable item management device 100 perform processing) that is transmitted to the valuable item management device 100 that has been permitted to communicatively connect. The terminal-side communication unit 210 transmits the information acquired by the processing information acquisition unit 293 to the valuable item management device 100 that has been permitted to communicatively connect. Furthermore, in the valuable item management device 100, the processing execution unit 193 executes processing based on information transmitted by the terminal-side communication unit 210.

Consequently, the tablet terminal device 200 functions as a terminal of the valuable item management device 100 that has been permitted to communicatively connect. Therefore, user operability can be ensured in a case where the area in which an operation input unit is mounted to the valuable item management device 100 is small.

Furthermore, the processor-side storage unit 180 stores an operation program that makes the tablet terminal device 200 display an operation screen for operating the valuable item management device 100 that includes the processor-side storage unit 180. Then, the processor-side communication unit 110 transmits the operation program to the tablet terminal device 200. In the tablet terminal device 200, the terminal-side display unit 220 displays an operation screen using the operation program transmitted by the processor-side communication unit 110.

In this manner, as a result of the valuable item management device 100 storing the operation program applied to the valuable item management device 100 beforehand and transmitting it to the tablet terminal device 200, the tablet terminal device 200 is able to execute the operation program that is applied to the valuable item management device 100 that is communicatively connected without the need to perform processing such as selection of the operation program. This aspect is able to reduce the burden on the tablet terminal device 200.

Furthermore, the image capturing unit 240 captures a face image of the user, and the terminal-side user authentication unit 291 performs authentication processing using the face image. As a result of the authentication, the tablet terminal device 200 functions as a terminal of the valuable item management device 100 only in a case where a user with permission to use the tablet terminal device 200 uses the tablet terminal device 200. This aspect is able to reduce the possibility of an unauthorized operation from being performed with respect to the valuable item management device 100.

As mentioned above, the tablet terminal device 200 (the terminal-side user authentication unit 291) may be made to perform authentication processing, or the terminal management device 300 (management-side user authentication unit 392) may be made to perform authentication processing.

Further, in a case where the tablet terminal device 200 performs authentication processing, as shown in FIG. 13, authentication processing is not limited to just an initial single time, and it is possible for authentication processing of the user to be performed at an arbitrary plurality of timings. Consequently, the possibility of an unauthorized operation by another user can be further reduced.

Furthermore, the processing information acquisition unit 293 acquires, based on the user operation received by the terminal-side operation input unit 230, information (first information) for making the valuable item management device 100 (first valuable item management device) to which the terminal-side communication unit 210 is communicatively connected perform processing. Moreover, the processing information acquisition unit 293 acquires, based on the user operation received by the terminal-side operation input unit 230, information (second information) for making the valuable item management device 100 (second valuable item management device) which performs processing related to the processing performed by the first valuable item management device perform processing. Then, the terminal-side storage unit 280 stores the second information. Furthermore, in a case where the processing information acquisition unit 293 has acquired the first information, the terminal-side communication unit 210 transmits the first information to the first valuable item management device. In a case where the second valuable item management device and the terminal-side communication unit 210 itself are communicatively connected, it sends the second information to the second valuable item management device.

Consequently, in a case where an operation with respect to each of a plurality of valuable item management devices 100 is related, the tablet terminal device 200 is able to acquire and transmit, based on a user operation with respect to the valuable item management device 100 in which an operation is firstly performed, information with respect to the valuable item management device 100 in which an operation is subsequently performed. This aspect is able to reduce the effort of the user inputting into the tablet terminal device 200, an operation with respect to the valuable item management device 100 in which an operation is subsequently performed.

Furthermore, the terminal-side storage unit 280 stores permission information for each user that represents the valuable item management devices 100 that the user is able to operate. Then, if the terminal-side communication unit 210 has a valuable item management device 100 with which it is able to communicatively connect, the device connection unit 292 determines, based on the permission information, whether or not the terminal-side communication unit 210 and the valuable item management device 100 are communicatively connected.

Consequently, the device connection unit 292 is able to inhibit a communication connection with respect to a valuable item management device 100 in which the user does not have an operation permission. This aspect is able to reduce the possibility of an erroneous operation (in particular, an operation with respect to an incorrect valuable item management device 100) with respect to the valuable item management device 100.

Furthermore, it is able to reduce the possibility of an unauthorized operation with respect to a valuable item management device 100 in which the user does not have an operation permission.

Moreover, the processor-side storage unit 180 stores permission information for each user, that represents the valuable item management devices that the user is able to operate. In this case, in step S122, the processor-side communication unit 110 transmits a response to the search signal that includes the permission information stored in the processor-side storage unit 180. Then, if the processor-side communication unit 110 has a tablet terminal device 200 with which it is able to communicatively connect, the device connection unit 292 determines, based on the permission information, whether or not a communication connection between the processor-side communication unit 110 and tablet terminal device 200 is to be permitted.

Consequently, the device connection unit 292 is able to inhibit a communication connection with respect to a valuable item management device 100 in which the user does not have an operation permission. This aspect is able to reduce the possibility of an erroneous operation (in particular, an operation with respect to an incorrect valuable item management device 100) with respect to the valuable item management device 100.

Furthermore, it is able to reduce the possibility of an unauthorized operation with respect to a valuable item management device in which the user does not have an operation permission.

Moreover, if the terminal-side operation input unit 230 receives a user operation with respect to a valuable item management device 100 with which the terminal-side communication unit 210 is not communicatively connected, the processing information acquisition unit 293 acquires information for making the valuable item management device 100 perform processing based on the user operation. Further, the processing information acquisition unit 293 stores the acquired information in the terminal-side communication unit 210. Then, the terminal-side communication unit 210, in a case where it is communicatively connected with the valuable item management device 100, transmits the information to the valuable item management device 100.

Consequently, if the tablet terminal device 200 is unable to communicatively connect with a valuable item management device 100 representing the operation subject, the user is able to input an operation with respect to the valuable item management device 100 into the tablet terminal device 200 beforehand. At the time the tablet terminal device 200 communicatively connects with the valuable item management device 100 representing the operation subject, it is able to rapidly notify to the valuable item management device 100 the operation that was input beforehand. This aspect increases the degree of freedom in the timing in which the user inputs the operation with respect to the valuable item management device 100 into the tablet terminal device 200.

For example, in a case where the valuable item management device 100 representing the operation target is being used by another user, or in a case where the tablet terminal device 200 is not in an area in which it can communicate with the valuable item management device 100, the user is able to input an operation with respect to the valuable item management device 100 into the tablet terminal device 200 beforehand.

The processor-side communication unit 110 may be able to simultaneously communicatively connect to a plurality of tablet terminal devices 200.

Furthermore, the terminal-side display unit 220 outputs (displays) a warning in a case where a logout operation from the terminal-side communication 210 in which the terminal-side display unit 220 itself is provided, is received by the terminal-side operation input unit 230, and the terminal-side storage unit 280 is storing information (information for making the valuable item management device 100 perform processing) to be transmitted to the valuable item management device 100.

In this manner, if information that has not yet been transmitted to the valuable item management device 100 remains in the terminal-side storage unit 280 at the time of user logout from the terminal-side communication unit 210, the terminal-side display unit 220 displays a warning to the user. Consequently, it is possible to reduce the possibility of unexecuted operations with respect to the valuable item management device 100 from occurring.

Furthermore, the management-side operation input unit 330 acquires a lending request of the tablet terminal device 200. Then, if the information representing the lending request and the information detected with respect to the usage permission condition of the tablet terminal device 200 for which there was a lending request (information indicating the usage permission condition of the tablet terminal device 200 for which there was a lending request) are matched, the terminal management unit 391 makes the tablet terminal device 200 for which there was a lending request a usable state.

Consequently, the terminal management unit 391 is able to inhibit use of the tablet terminal device 200 by a user that does not conform to a usage permission condition. This aspect is able to reduce the possibility of an unauthorized operation with respect to the valuable item management device 100 by a user that does not have a permission.

Moreover, the management-side storage unit 380 stores user information in which the tablet terminal device 200 and the users that are able to use the tablet terminal device 200 are associated. Further, if the terminal management unit 391 acquires from the user a lending request of the tablet terminal device 200, it selects as the tablet terminal device 200 representing the lending subject, a tablet terminal device 200 that the user is able to use, based on the user information.

Consequently, the terminal management unit 391 is able to select a tablet terminal device 200 having a usage permission according to the user. This aspect is able to reduce the possibility of an unauthorized operation with respect to the valuable item management device 100, from a user using a tablet terminal device 200 without a usage permission.

Furthermore, the processor-side storage unit 180 stores an operation program that makes the tablet terminal device 200 display an operation screen for operating the valuable item management device that includes the processor-side storage unit 180 itself. Then, in a case where the valuable item management device 100 and the tablet terminal device 200 are communicatively connected, the processor-side communication unit 110 transmits the operation program to the tablet terminal device 200 that is communicatively connected.

Consequently, the tablet terminal device 200 is able to function as a terminal device of the valuable item management device 100 that is communicatively connected. The user convenience can be ensured from an aspect of being able to reduce the possibility of the user being unable to perform an operation with respect to the valuable item management device 100 representing the operation subject.

Furthermore, in a case where the terminal-side display unit 220 is located within a range that is predetermined with respect to the valuable item management device 100, it displays an operation screen for operating the valuable item management device 100.

Consequently, the user is able to select the valuable item management device 100 to be operated by a simple operation of positioning the tablet terminal device 200 within a range determined with respect to the valuable item management device 100.

Moreover, if the terminal management unit 391 detects that an estimated time of return that has been set with respect to the loaned tablet terminal device 200 has arrived, and determines that the tablet terminal device 200 has not been returned, then the management-side display unit 320 outputs (displays) a warning.

Consequently, the terminal management device 300 is able to support lending period management of the terminal management unit 391. That is to say, an administrator that manages the tablet terminal device 200 is able to grasp lending period expirations of the terminal management unit by referring to the warning displayed on the management-side display unit 320.

Furthermore, if the loaned tablet terminal device 200 is returned, the terminal management unit 391 deletes the operation history information stored in the tablet terminal device 200.

Consequently, the tablet terminal device 200 is able to be reset for the next usage, and in particular, it is possible to reduce the possibility of memory shortages at the time the tablet terminal device 200 is next used. Moreover, it is possible to reduce the possibility of the operation history information being leaked.

Moreover, if the loaned tablet terminal device 200 is returned, the terminal management unit 391 stores the information stored in the terminal-side storage unit 280 of the tablet terminal device 200, in the management-side storage unit 380.

Consequently, the terminal management device 300 is able to collectively manage the information stored by the terminal management unit 391.

Furthermore, as a result of the tablet terminal device 200 storing information related to an operation, it can be used for describing the information. For example, if a user submits an inquiry regarding a cash storage location, the cash storage location can be described while referencing the deposit and withdrawal record stored by the tablet terminal device 200.

Moreover, by displaying the information related to the valuable item management device 100 on the tablet terminal device 200, even in a case where the valuable item management device 100 does not have a display screen, or even in a case where the display screen on the valuable item management device 100 is small, the user is able to display the information such that it is easily viewed. For example, as a result of the user displaying on the tablet terminal device 200 information having a browsability, such as maintenance setting information and calculation information, the information can be made more easily viewed.

### <Second Embodiment>

In the first embodiment, a case where the tablet terminal device 200 acquires the operation program from the valuable item management device 100 is described. Alternatively, the tablet terminal device 200 may be made to store the operation program beforehand. In the second embodiment, a case where the tablet terminal device 200 stores the operation program beforehand is described.

The device configuration of a valuable item management system 1 according to the second embodiment is the same as that described with reference to FIG. 1, and the description is omitted.

FIG. 19 is a schematic block diagram showing a functionality configuration of a valuable item management device 100 according to the second embodiment of the present invention. As shown in FIG. 19, the valuable item management device 100 includes a processor-side communication unit 110, a processor-side display unit 120, a processor-side operation input unit 130, a processor-side storage unit 180, and a processor-side control unit 190. The processor-side control unit 190 includes a connection management unit 191 and a processing execution unit 193.

Among the units shown in FIG. 19, the same reference symbols (100, 110, 120, 130, 180, 190, 191, and 193) are given to units having the same functionalities corresponding to the respective units shown in FIG. 2, and the description is omitted.

The valuable item management device 100 (FIG. 19) of the second embodiment is different from the valuable item management device 100 (FIG. 2) of the first embodiment in the aspect that it does not include an operation program transmission processing unit 192. In the second embodiment, the tablet terminal device 200 has stored the operation program beforehand. Therefore, it is not necessary for the valuable item management device 100 to transmit the operation program to the tablet terminal device 200. Consequently, the valuable item management device 100 does not include an operation program transmission processing unit 192. In the other aspects, the functionality configuration of the valuable item management device 100 of the second embodiment is the same as that of the first embodiment.

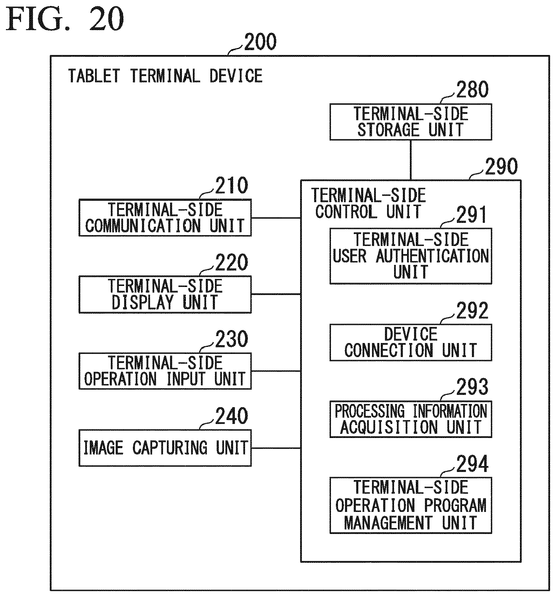

FIG. 20 is a schematic block diagram showing a functionality configuration of a tablet terminal device 200 according to the second embodiment. As shown in FIG. 20, the tablet terminal device 200 includes a terminal-side communication unit 210, a terminal-side display unit 220, a terminal-side operation input unit 230, an image capturing unit 240, a terminal-side storage unit 280, and a terminal-side control unit 290. The terminal-side control unit 290 includes a terminal-side user authentication unit 291, a device connection unit 292, a processing information acquisition unit 293, and a terminal-side operation program management unit (operation program management unit) 294.

Among the units shown in FIG. 20, the same reference symbols (200, 210, 220, 230, 240, 280, 290, 291, 292, and 293) are given to units having the same functionalities corresponding to the respective units shown in FIG. 6, and the description is omitted.

The tablet terminal device 200 (FIG. 20) of the second embodiment is different from the tablet terminal device 200 (FIG. 6) of the first embodiment in the aspect that it includes a terminal-side operation program management unit 294. Furthermore, the terminal-side storage unit 280 has stored a plurality of operation programs beforehand according to the valuable item management devices 100. The terminal-side storage unit 280 may store an operation program for each valuable item management device 100. Alternatively, if the same operation program is able to be utilized by the same type of valuable item management devices 100, the terminal-side storage unit 280 may store an operation program for each type of valuable item management devices 100. For example, the terminal-side storage unit 280 may store an operation program for a cashier machine, an operation program for a cash management device, and an operation program for an important item management device.

In the aspects other than those described above, the functionality configuration of the tablet terminal device 200 of the second embodiment is the same as that of the first embodiment.

In a case where a communication connection has been permitted between the tablet terminal device 200 including the terminal-side operation program management unit 294 itself and one of the valuable item management devices 100, the terminal-side operation program management unit 294 selects among the operation programs stored in the terminal-side storage unit 280, the operation program corresponding to the valuable item management device 100 whose communication connection has been permitted. As mentioned above, the operation program is a program that makes the terminal device display an operation screen for operating the valuable item management device 100 (that is, a program that makes the tablet terminal device 200 function as a terminal device of the valuable item management device 100).

The terminal-side display unit 220, in the same manner as the case of the first embodiment, executes the operation program and displays an operation screen. In the second embodiment, the terminal-side operation program management unit 294 selects the operation program, and the terminal-side display unit 220 executes the operation program.

The functionality configuration of the terminal management device 300 in the second embodiment is the same as that described with reference to FIG. 11, and the description is omitted.

In this manner, in the second embodiment, the terminal-side storage unit 280 stores the operation program beforehand. Consequently, it is not necessary for the tablet terminal device 200 to receive (download) the operation program from the valuable item management device 100. This aspect is able to reduce the load of the valuable item management device 100 and the tablet terminal device 200.

Furthermore, the tablet terminal device 200 is able to operate as a terminal device of the valuable item management device 100 without waiting for reception of the operation program to complete. That is to say, the tablet terminal device 200 is able to rapidly operate as a terminal device of the valuable item management device 100 after being communicatively connected with the valuable item management device 100.

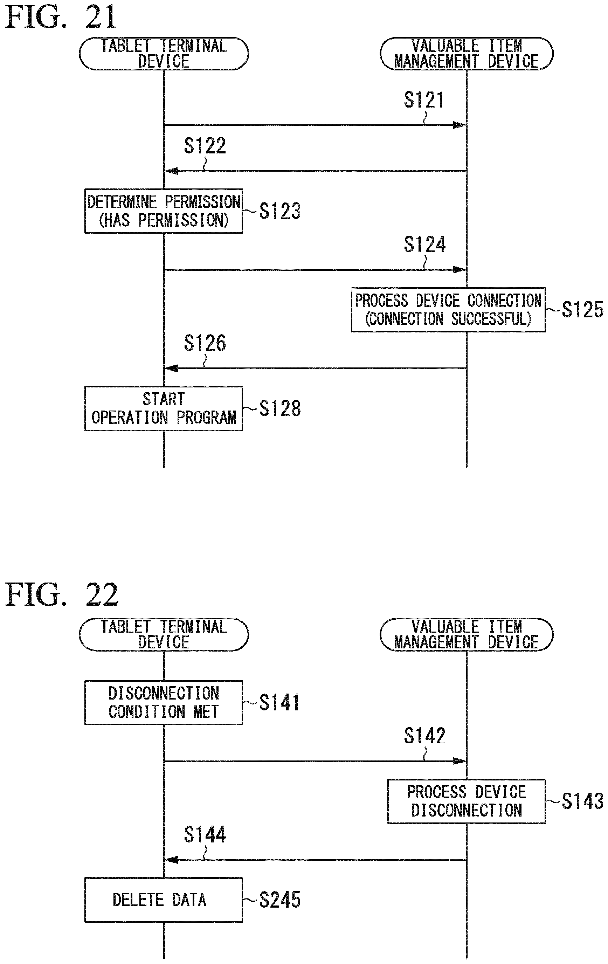

Next, an operation of the valuable item management system 1 in the second embodiment is described with reference to FIG. 21 and FIG. 22. The outline of the operation of the valuable item management system 1 in the second embodiment is the same as that described with reference to FIG. 13, and the description is omitted. Furthermore, details of the processing in steps S101, S103, and S105 in FIG. 13 are the same as that described with reference to FIG. 14, FIG. 16, and FIG. 18, respectively, and the description is omitted. In the second embodiment, details of the processing in steps S102 and S104 in FIG. 13 is different from the case of the first embodiment.

FIG. 21 is an explanatory view showing an example of a sequence in which a tablet terminal device 200 and a valuable item management device 100 in the second embodiment perform device connection processing with respect to the valuable item management device 100. The tablet terminal device 200 and the valuable item management device 100 perform the processing in FIG. 21 in step S102 in FIG. 13.

Among steps in FIG. 21, the same reference symbols (S121, S122, S123, S124, S125, S126, and S128) are given to those that perform the same processing as steps in FIG. 15, and the description is omitted. The processing in FIG. 21 is different from that in FIG. 15 in that step S127, in which the valuable item management device 100 transmits an operation program to the tablet terminal device 200, is not included. The other processing is the same as the case of FIG. 15.

In the second embodiment, the terminal-side storage unit 280 has stored the operation program beforehand. Therefore, it is not necessary for the valuable item management device 100 to transmit the operation program to the tablet terminal device 200. Consequently, the processing in FIG. 21 does not include step S127.

FIG. 22 is an explanatory view showing an example of a sequence in which a tablet terminal device 200 and a valuable item management device 100 in the second embodiment perform device disconnection processing from the valuable item management device 100. The tablet terminal device 200 and the valuable item management device 100 perform the processing in FIG. 22 in step S104 in FIG. 13.

Among steps in FIG. 22, the same reference symbols (steps S141, S142, S143, and S 144) are given to those that perform the same processing as steps in FIG. 17, and the description is omitted. In the processing in FIG. 22, the device connection unit 292 deletes only the data accompanying the operation with respect to the valuable item management device 100 in step S245, and the operation program itself is not deleted. This aspect is different from the processing in step S145, in which the device connection unit 292 deletes the operation program and the data associated with the operation with respect to the valuable item management device 100. The other processing is the same as the case of FIG. 17.

In the second embodiment, the terminal-side storage unit 280 has stored the operation program beforehand, and deletion of the operation program is not performed after executing of the operation program. Consequently, in step S245 in FIG. 22, the device connection unit 292 does not perform deletion of the operation program.

In the manner above, the terminal-side storage unit 280 stores a plurality of operation programs, each of which makes the terminal-side display unit 220 display an operation screen for operating the valuable item management device 100, that correspond to the valuable item management devices 100. Further, in a case where a communication connection has been permitted between the tablet terminal device 200 and one of the valuable item management devices 100, the terminal-side operation program management unit 294 selects among the plurality of operation programs stored in the terminal-side storage unit 280, the operation program corresponding to the valuable item management device 100 that has been permitted to communicatively connect. Then, the terminal-side display unit 220 uses the operation program selected by the terminal-side operation program management unit 294 and displays the operation screen.

In this manner, the tablet terminal device 200 stores the operation program beforehand, and selects and executes the operation program applied to the valuable item management device 100 that has been permitted to communicatively connect. Consequently, the tablet terminal device 200 is able to execute a suitable operation program without needing to acquire the operation program via a communication. This aspect is able to reduce communication load. Furthermore, the time required for communicating the operation program is unnecessary. Therefore, the tablet terminal device 200 is able to rapidly start execution of the operation program, and function as a terminal of the valuable item management device 100.

### <Third Embodiment>

In the first embodiment, a case where the tablet terminal device 200 acquires the operation program from the valuable item management device 100 is described. Alternatively, the tablet terminal device 200 may be made to acquire the operation program from the terminal management device 300. In the third embodiment, a case where the tablet terminal device 200 acquires the operation program from the terminal management device 300 is described.

The device configuration of a valuable item management system 1 according to the third embodiment is the same as that described with reference to FIG. 1, and the description is omitted.

The functionality configuration of a valuable item management device 100 according to the third embodiment is the same as that described with reference to FIG. 19, and the description is omitted. In the same manner as the case of the second embodiment, in the third embodiment it is not necessary for the valuable item management device 100 to transmit the program to the tablet terminal device 200. Consequently, in the manner of FIG. 19, the valuable item management device 100 does not include an operation program transmission processing unit 192.

The functionality configuration of a tablet terminal device 200 according to the third embodiment is the same as that described with reference to FIG. 20, and the description is omitted. In order for the tablet terminal device 200 of the third embodiment to function as a terminal device of a plurality of valuable item management devices 100, there is a case where it acquires a plurality of operation programs from the terminal management device 300, and stores them in the terminal-side storage unit 280. Consequently, in the same manner as the case in FIG. 20 of the second embodiment, the tablet terminal device 200 of the third embodiment includes a terminal-side operation program management unit 294.

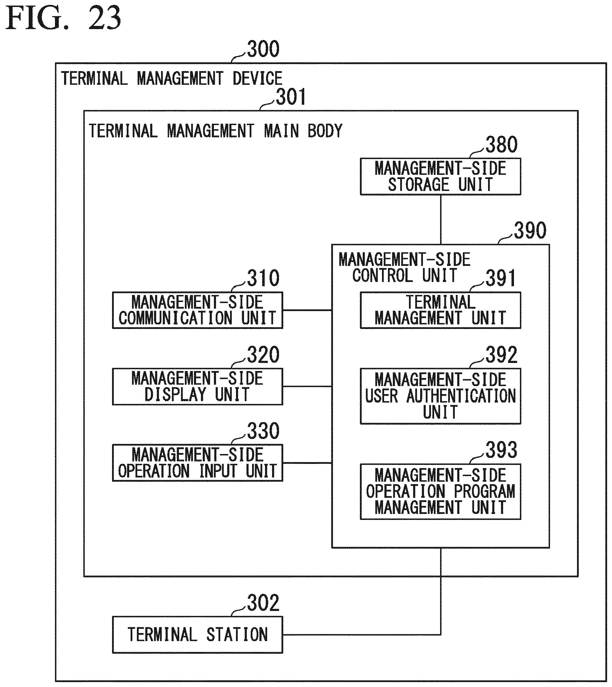

FIG. 23 is a schematic diagram showing a functionality configuration of the terminal management device 300 according to the third embodiment of the present invention. As shown in FIG. 23, the terminal management device 300 includes a terminal management main body 301 and a terminal station 302. The terminal management main body 301 includes a management-side communication unit 310, a management-side storage unit 380, and a management-side control unit 390. The management-side control unit 390 includes a terminal management unit 391, a management-side user authentication unit 392, and a management-side operation program management unit (operation program management unit) 393.

Among the units shown in FIG. 23, the same reference symbols (300, 301, 302, 310, 320, 330, 380, 390, 391, and 392) are given to units having the same functionalities corresponding to the respective units shown in FIG. 11, and the description is omitted.

The terminal management device 300 (FIG. 23) of the third embodiment is different from the terminal management device 300 (FIG. 11) of the first embodiment in that it includes a management-side operation program management unit 393. Furthermore, the management-side storage unit 380 stores operation programs that correspond to each of the valuable item management devices 100 provided to the valuable item management system 1. The management-side storage unit 380 may be made to store an operation program for each valuable item management device 100. Alternatively, if the same operation program is able to be utilized by the same type of valuable item management device 100, the management-side storage unit 380 may be made to store an operation program for each type of valuable item management device 100.

In the aspects other than those described above, the functionality configuration of the terminal management device 300 of the third embodiment is the same as that of the first embodiment.

The management-side operation program management unit 393 reads out the operation program from the management-side storage unit 380 and transmits it to the tablet terminal device 200. Specifically, the terminal management device 300 communicates with the tablet terminal device 200, and asks the tablet terminal device 200 about the valuable item management device 100 accessed by the tablet terminal device 200. The tablet terminal device 200 transmits to the terminal management device 300 information (information indicating which operation program of the valuable item management device 100 is necessary) indicating the valuable item management device 100 to be accessed. In a case where there are a plurality of valuable item management devices 100 that are accessed by the tablet terminal device 200, the tablet terminal device 200 transmits information indicating all of the valuable item management devices 100 to be accessed. Further, the management-side operation program management unit 393 reads out from the management-side storage unit 380, the operation program of the valuable item management device 100 to be accessed by the tablet terminal device 200, and makes the management-side communication unit 310 transmit it to the tablet terminal device 200. If there are a plurality of valuable item management devices 100 to be accessed by the tablet terminal device 200, the management-side operation program management unit 393 reads out from the management-side storage unit 380, operation programs of all of the valuable item management devices 100 to be accessed by the tablet terminal device 200, and makes the management-side communication unit 310 transmit them to the tablet terminal device 200.

Then, in the tablet terminal device 200, the one or more operation programs that are received are stored in the terminal-side storage unit 280.

The combination of the management-side communication unit 310 and the management-side operation program management unit 393 corresponds to an example of a usage information transmission unit. The management-side operation program management unit 393 selects an operation program, and the management-side communication unit 310 transmits the selected program.

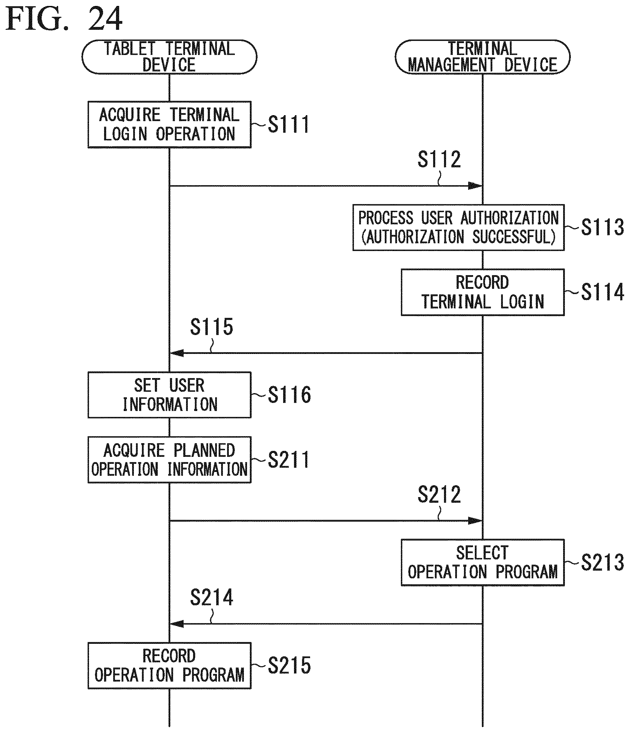

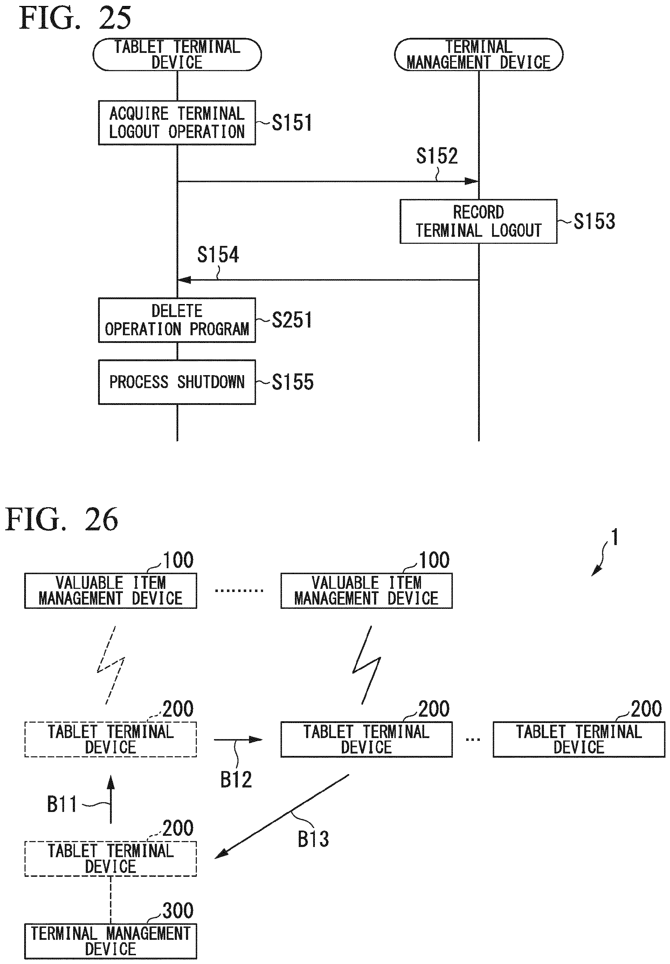

Next, an operation of the valuable item management system 1 in the third embodiment is described with reference to FIG. 24 and FIG. 25. The outline of the operation of the valuable item management system in the third embodiment is the same as described with reference to FIG. 13, and the description is omitted. Furthermore, details of the processing in steps S102, S103, and S104 in FIG. 13 are the same as that described with reference to FIG. 21, FIG. 16, and FIG. 22, respectively, and the description is omitted. In the third embodiment, details of the processing in steps S101 and S105 in FIG. 13 is different from the case of the second embodiment.

FIG. 24 is an explanatory diagram showing an example of a sequence in which a terminal management device 300 and a tablet terminal device 200 in the third embodiment perform processing of a user logging in to the tablet terminal device 200. The terminal management device 300 and the tablet terminal device 200 perform the processing in FIG. 24 in step S101 in FIG. 13.

Among steps in FIG. 24, the same reference symbols (S111, S112, S113, S114, S115, and S116) are given to those that perform the same processing as steps in FIG. 14, and the description is omitted. The processing in FIG. 24 is different to that in FIG. 14 in that it includes steps S211 to S215.

After the user information is set in step S116, the terminal-side operation program management unit 294 of the tablet terminal device 200 acquires planned operation information (step S211). The planned operation information referred to here represents information indicating with respect to which valuable item management device 100 the user performs an operation, in the order of the earliest operation. The terminal-side operation program management unit 294 acquires planned operation information according to the user operation received by the terminal-side operation input unit 230. For example, the terminal-side display unit 220 displays a menu containing several items such as "transfer cash from the cashier machine to the important item management device", and the user selects one of the items in the menu. The terminal-side operation program management unit 294 determines with respect to which valuable item management device 100 the user performs an operation, from the item selected by the user.

Then, the terminal-side operation program management unit 294 controls the terminal-side communication unit 210 and transmits the obtained planned operation information to the terminal management device 300 (step S212: Planned Operation Information).

In the terminal management device 300 that has received the planned operation information, the management-side operation program management unit 393 selects among the operation programs stored in the management-side storage unit 380, the operation programs to be transmitted to the tablet terminal device 200 (step S213). In a case where the management-side storage unit 380 stores an operation program for each valuable item management device 100, the management-side operation program management unit 393 refers to the planned operation information and selects an operation program for each valuable item management device 100 accessed by the tablet terminal device 200. Alternatively, in a case where the management-side storage unit 380 stores an operation program for each type of valuable item management device 100, the management-side operation program management unit 393 refers to the planned operation information and selects an operation program for each type of valuable item management device 100 accessed by the tablet terminal device 200.

Then, the management-side operation program management unit 393 controls the management-side communication unit 310 and transmits the operation program selected in step S213 to the tablet terminal device 200 (step S214: Planned Operation Information).

In the tablet terminal device 200 that receives the operation program, the terminal-side operation program management unit 294 stores the operation program in the terminal-side storage unit 280 (step S215).

In step S211, the terminal-side operation program management unit 294 may, in place of acquiring the planned operation information, acquire based on the user information set in step S116, information for each valuable item management device 100 to which the user is provided with a usage permission, or information for each type of valuable item management device 100 to which the user is provided with a usage permission. Then, in step S212, the terminal-side operation program management unit 294 may, in place of the planned operation information, transmit information for each of the valuable item management devices 100 or information for each type of valuable item management device 100, to the terminal management device 300. In the terminal management device 300, the terminal management unit 391 selects based on the transmitted information for each of the valuable item management devices 100 or information for each type of valuable item management device 100, the operation program to be transmitted to the tablet terminal device 200. For example, the terminal management unit 391 selects the operation programs for all of the valuable item management devices 100 to which the user is provided with a usage permission, as the operation programs to be transmitted to the tablet terminal device 200.

Consequently, the user is able to use the tablet terminal device 200 without the need to input the planned operation information.

FIG. 25 is an explanatory view showing an example of a sequence in which the terminal management device 300 and the tablet terminal device 200 in the third embodiment perform logout processing from the tablet terminal device 200. The terminal management device 300 and the tablet terminal device 200 perform the processing in FIG. 25 in step S105 in FIG. 13.

Among steps in FIG. 25, the same reference symbols (S151, S152, S153, S154, and S155) are given to those that perform the same processing as steps in FIG. 18, and the description is omitted. The processing in FIG. 25 is different from that in FIG. 18 in that it includes step S251. The other processing is the same as the case of FIG. 18.

In the tablet terminal device 200 that has received a recording completion notification in step S154, the terminal-side operation program management unit 294 deletes the operation program stored in the terminal-side storage unit 280 (step S251). This is because the tablet terminal device 200 does not contain the operation program at the state at the time of startup, and is made to be returned to the startup state.

After step S251, a transition to step S155 is performed.

As described above, if the terminal management unit 391 acquires a lending request of the tablet terminal device 200 that contains planned operation targets or information indicating the valuable item management devices 100 to which the user has a usage permission, it stores the operation programs for operating the planned operation targets or the valuable item management devices 100 having a usage permission in the tablet terminal device 200, and selects as the lending target terminal device the tablet terminal device 200 in which the operation program is stored.

According to the terminal management device 300, it is possible to reduce the possibility of the user erroneously selecting a tablet terminal device 200 that is unable to be used as a terminal of the planned operation targets or the valuable item management devices 100 to which the user has a usage permission. This aspect is able to obtain user convenience.

### <Fourth Embodiment>

In the second embodiment, a case where the tablet terminal device 200 stores the operation program beforehand is described. In a case where the valuable item management system 1 includes a plurality of tablet terminal devices 200, it is not necessary for every tablet terminal device 200 to store operation programs for all of the valuable item management devices 100. In the fourth embodiment, a case where the valuable item management system 1 includes a plurality of tablet terminal devices 200, and the tablet terminal devices 200 store one or more operation programs beforehand is described.

FIG. 26 is a schematic diagram showing a device configuration of a valuable item management system 1 according to a fourth embodiment of the present invention. As shown in FIG. 26, the valuable item management system 1 includes a plurality of valuable item management devices 100, a plurality of tablet terminal devices 200, and a terminal management device 300.

FIG. 26 shows that the valuable item management system 1 includes a plurality of tablet terminal devices 200. In the other aspects, the device configuration of the valuable item management system 1 in the fourth embodiment is the same as that of the first embodiment. The number of tablet terminal devices 200 provided to the valuable item management system 1 in the fourth embodiment may be two or more.

The functionality configuration of the valuable item management device 100 according to the fourth embodiment is the same as that described with reference to FIG. 19, and the description is omitted. In the same manner as the second embodiment, in the fourth embodiment it is not necessary for the valuable item management device 100 to send a program to the tablet terminal device 200. Consequently, in the same manner as FIG. 19, the valuable item management device 100 do not include an operation program transmission processing unit 192.

The functionality configuration of the tablet terminal device 200 according to the fourth embodiment is the same as that described with reference to FIG. 20, and the description is omitted. There is a case where the tablet terminal device 200 of the fourth embodiment acquires a plurality of operation programs from the terminal management device 300 beforehand in order to function as a terminal device of a plurality of valuable item management devices 100. Consequently, in the same manner as FIG. 20 of the second embodiment, the tablet terminal device 200 of the fourth embodiment includes a terminal-side operation program management unit 294 in the manner of FIG. 20.

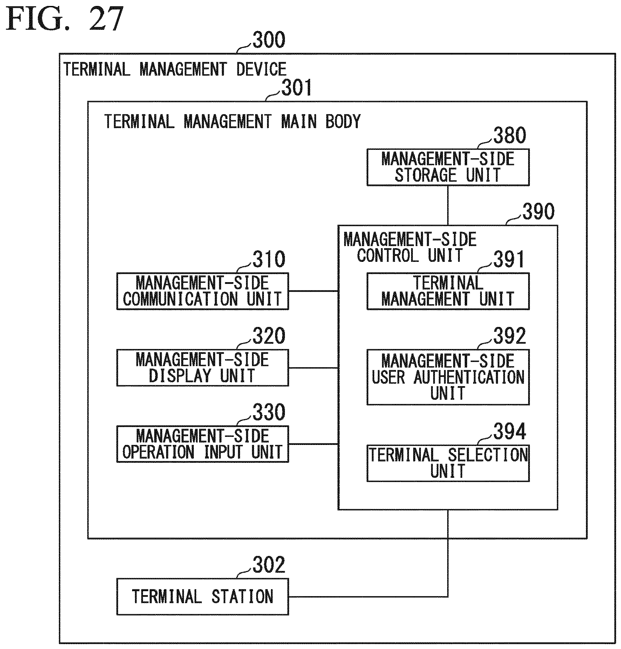

FIG. 27 is a schematic diagram showing a functionality configuration of the terminal management device 300 according to the fourth embodiment of the present invention. As shown in FIG. 27, the terminal management device 300 includes a terminal management main body 301 and a terminal station 302. The terminal management main body 301 includes a management-side communication unit 310, a management-side storage unit 380, and a management-side control unit 390. The management-side control unit 390 includes a terminal management unit 391, a management-side user authentication unit 392, and a terminal selection unit 394.

Among the units shown in FIG. 27, the same reference symbols (300, 301, 302, 310, 320, 330, 380, 390, 391, and 392) are given to units having the same functionalities corresponding to the respective units shown in FIG. 11, and the description is omitted.

The terminal management device 300 (FIG. 27) of the fourth embodiment is different from the terminal management device 300 (FIG. 11) of the first embodiment in that it includes a terminal selection unit 394. Furthermore, the management-side storage unit 380 stores an operation program corresponding to the valuable item management device 100. In the fourth embodiment, it is not necessary for all of the tablet terminal devices 200 to store operation programs for all of the valuable item management devices 100. However, the operation programs for all valuable item management devices 100 provided to the valuable item management system 1 are stored in at least either one of the tablet terminal devices 200.

The management-side storage unit 380 may be made to store an operation program for each valuable item management device 100. Alternatively if the same operation program is able to be utilized by the same type of valuable item management device 100, the management-side storage unit 380 may be made to store an operation program for each type of valuable item management device 100.

In the aspects other than those described above, the functionality configuration of the terminal management device 300 of the fourth embodiment is the same as that of the first embodiment.

The terminal selection unit 394 selects the tablet terminal device 200 used by the user according to the processing that the valuable item management device 100 is made to perform by the user. Specifically, the terminal selection unit 394 acquires information indicating the processing that the valuable item management device 100 is made to perform by the user, and the valuable item management device 100 accessed by the user is determined from the information. Then, the terminal selection unit 394 selects a tablet terminal device 200 that is storing the operation programs corresponding to all of the valuable item management devices 100 accessed by the user.

Depending on the processing that the valuable item management device 100 is made to perform by the user, there is a case where there is no tablet terminal device 200 that is storing the operation programs corresponding to all of the valuable item management devices 100 used by the user, in a single tablet terminal device 200. In this case, for example, the terminal selection unit 394 successively examines the valuable item management device 100 that the user uses first, the valuable item management device 100 that the user uses second, and so on, and selects the tablet terminal device 200 that is the slowest to become unable to use the valuable item management devices 100 with a single tablet terminal device 200.

For example, it is assumed that the valuable item management system 1 includes two, namely, first and second, tablet terminal devices 200, and the user uses first to fourth valuable item management devices in the ordinal order. Furthermore, it is assumed that the first tablet terminal device 200 has stored the operation programs corresponding to the first, third, and fourth valuable item management devices 100, but it has not stored the operation program with respect to the second valuable item management device 100. Moreover, it is assumed that the second tablet terminal device 200 has stored the operation programs corresponding to the first and second valuable item management devices 100, but it has not stored the operation programs corresponding to the third and fourth valuable item management devices 100.

In this case, the terminal selection unit 394 selects the second tablet terminal device 200. The user can perform an operation with respect to the first valuable item management device 100 using the second tablet terminal device 200, and subsequently perform an operation with respect to the second valuable item management device 100. At the time the user performs the operation with respect to the second valuable item management device 100, if the information stored in the second tablet terminal device 200 related to the operation with respect to the first valuable item management device 100, is made to be automatically set by the second tablet terminal device 200, the burden on the user can be reduced.

In contrast, supposing a case where the user uses the first tablet terminal device 200, and after the user performs an operation with respect to the first valuable item management device 100, there is a need to switch from the first tablet terminal device 200 to the second tablet terminal device 200 in order to perform an operation with respect to the second valuable item management device 100. In this case, at the time the user performs the operation with respect to the second valuable item management device 100, the second tablet terminal device 200 has not stored information related to the operation with respect to the first valuable item management device 100, and thus it is not possible to automatically set the information. Therefore, if the user firstly uses the first tablet terminal device 200, it is not possible to reduce the burden on the user.

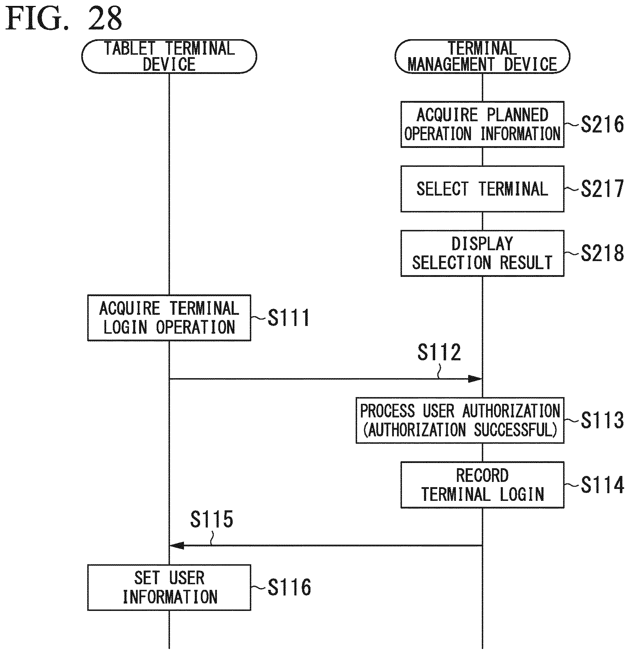

Next, an operation of the valuable item management system 1 in the fourth embodiment is described with reference to FIG. 28. The summary of the operation of the valuable item management system in the fourth embodiment is the same as described with reference to FIG. 13, and the description is omitted. Furthermore, details of the processing in steps S102, S103, S104, and S105 in FIG. 13 are the same as that described with reference to FIG. 21, FIG. 16, FIG. 22, and FIG. 18, respectively, and the description is omitted. In the fourth embodiment, details of the processing in step S101 in FIG. 13 is different from the case of the second embodiment.

FIG. 28 is an explanatory view showing an example of a sequence in which a terminal management device 300 and a tablet terminal device 200 in the fourth embodiment perform processing of a user logging in to the tablet terminal device 200. The terminal management device 300 and the tablet terminal device 200 perform the processing in FIG. 28 in step S101 in FIG. 13.

Among steps in FIG. 28, the same reference symbols (Sill, S112, S113, S114, S115, and S116) are given to those that perform the same processing as steps in FIG. 14, and the description is omitted. The processing in FIG. 26 is different to that in FIG. 14 in that it includes steps S216 to S218.

In the processing in FIG. 28, the terminal selection unit 394 acquires planned operation information (step S216). As mentioned above, the planned operation information represents information indicating with respect to which valuable item management device 100 the user performs an operation, in the order of the earliest operation. The terminal selection unit 394 acquires planned operation information according to the user operation received by the management-side operation input unit 330. For example, the management-side display unit 320 displays a menu containing several items such as "transfer cash from the cashier machine to the important item management device", and the user selects one of the items in the menu. The terminal selection unit 394 determines with respect to which valuable item management device 100 the user performs an operation, from the item selected by the user.

Then, the terminal selection unit 394 selects the tablet terminal device 200 based on the obtained planned operation information (step S217). For example, the management-side storage unit 380 stores beforehand for each tablet terminal device 200, information indicating the operation programs the tablet terminal device 200 is storing. Further, the terminal selection unit 394 refers to the information and the planned operation information, and selects a tablet terminal device 200 that is storing operation programs corresponding to all of the valuable item management devices 100 to which the user performs an operation. If there is no tablet terminal device 200 that is storing operation programs corresponding to all of the valuable item management devices 100 to which the user performs an operation, then the terminal selection unit 394, as described above, selects the tablet terminal device 200 that is the slowest to become unable to use the valuable item management devices 100 with a single tablet terminal device 200.

Then, the terminal selection unit 394 displays a selection result (information indicating the selected tablet terminal device 200) on the management-side display unit 320 (step S218). The terminal management unit 391 may lock the tablet terminal devices 200 accommodated in the terminal station 302 such that they do not operate, and only start up the tablet terminal device 200 selected by the terminal selection unit 394. Consequently, it is possible to prevent the user from erroneously using another tablet terminal device 200. Furthermore, it is possible to reduce the possibility of malicious persons from performing unauthorized use of a tablet terminal device 200 for which usage is not permitted.

After step S218, a transition to step Sill is performed. That is to say, the user uses the tablet terminal device 200 displayed in step S218 and performs a login processing with respect to the tablet terminal device 200.

In the manner above, the terminal-side storage unit 280 stores, with respect to one or more valuable item management devices 100, the operation program for operating the valuable item management device 100. Further, if the terminal selection unit 394 acquires a lending request of a tablet terminal device 200 that contains information indicating a valuable item management device 100 representing the operation target, it selects as the lending target tablet terminal device 200, the tablet terminal device 200 storing the operation program for operating the operation target valuable item management device 100 (the tablet terminal device 200 including a terminal-side storage unit 280 that is storing the operation program).

According to the terminal management device 300, it is possible to reduce the possibility of the user erroneously selecting a tablet terminal device 200 that is unable to be used as a terminal of the operation target valuable item management device 100. This aspect is able to obtain user convenience.

### <Fifth Embodiment>

In the third embodiment, a case where the terminal management device 300 makes the tablet terminal device 200 store the operation programs of the valuable item management devices 100 that the user is planning to operate are described as an example with reference to FIG. 24. In contrast, as mentioned above in the third embodiment, the terminal management device 300 may make the tablet terminal device 200 store operation programs not limited to the valuable item management device 100 that the user is planning to operate, but all valuable item management devices 100 to which the user is provided with a usage permission. This aspect is described in the fifth embodiment.

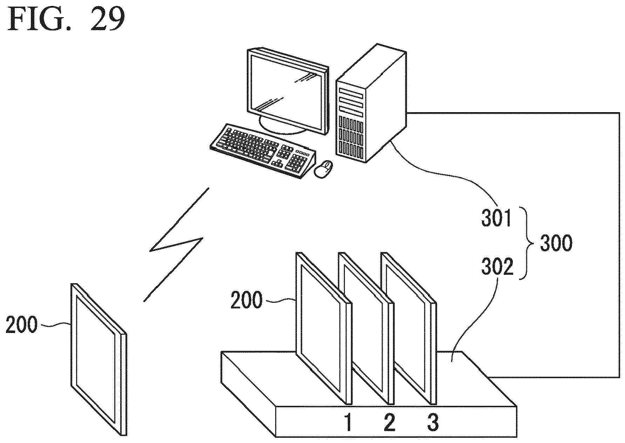

FIG. 29 is an explanatory view showing an example of an external form of a terminal management device 300 according to a fifth embodiment of the present invention. In the same manner as the case of FIG. 12, the example of FIG. 29 shows the case where the terminal station 302 performs recharging with respect to the tablet terminal device 200 in a state where it is accommodating the tablet terminal device 200. The example of FIG. 29 is different from that of FIG. 12 in that on a side surface of the terminal station 302 is displayed the numbers "1", "2", and "3" for each slot that stores a tablet terminal device 200.

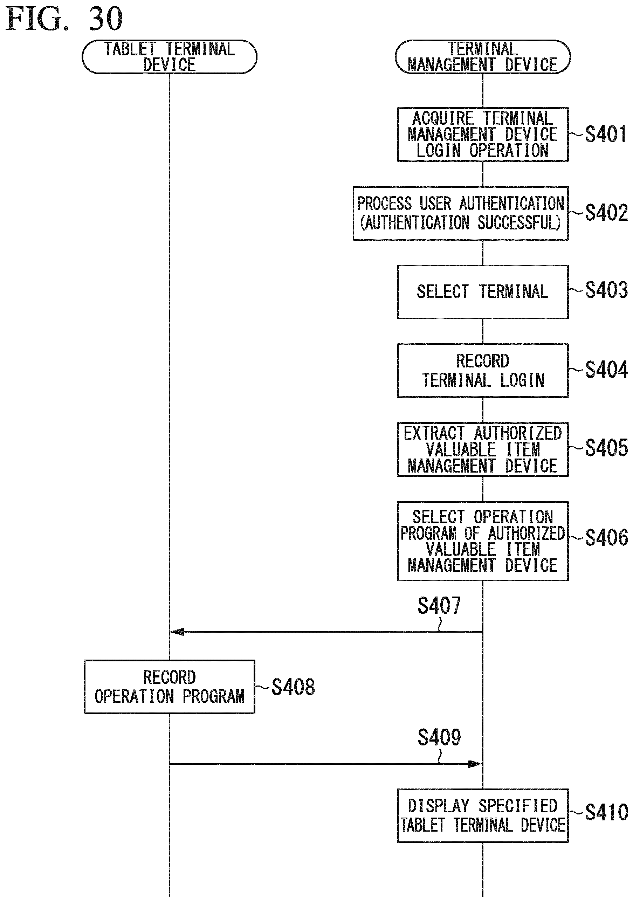

FIG. 30 is an explanatory view showing an example of a processing sequence according to the fifth embodiment in which the terminal management device 300 and the tablet terminal device 200 set the tablet terminal device 200 to a usable state in response to a user. The terminal management device 300 and the tablet terminal device 200 perform the processing in FIG. 24 in step S101 in FIG. 13.

In the processing in FIG. 30, the terminal management device 300 receives, from a user planning to use the tablet terminal device 200, a user operation (authentication request operation) requesting login with respect to the terminal management device 300 (step S401). Then, the management-side user authentication unit 392 performs user authentication (step S402).

In step S402, when the management-side user authentication unit 392 succeeds in the user authentication, the terminal management unit 391 selects one among the tablet terminal devices 200 stored in the terminal station (step S403).

Next, the management-side storage unit 380 stores according to control by the management-side control unit 390, a login record specifying the user, the terminal device selected in step S403, and the date and time of the login (step S404).

Furthermore, the terminal management unit 391 extracts the valuable item management devices 100 that the user that performed login is permitted to operate (step S405). For example, the management-side storage unit 380 stores beforehand, operation permission information that indicates for each user the valuable item management devices 100 that the user is permitted to operate. Then, the terminal management unit 391 refers to the operation permission information, and reads out information indicating the valuable item management devices 100 that the user that performed login is permitted to operate. A device other than the terminal management device 300 may be made to store the operation permission information. For example, the valuable item management system 1 may further include a management database device that manages various information, and the management database device may be made to store beforehand operation permission information as a portion of the information related to the user. In this case, the terminal management unit 391 accesses the management database device via the management-side communication unit 310, refers to the operation permission information, and reads out information indicating the valuable item management devices 100 that the user that performed login is permitted to operate.

After step S405, the terminal management unit 391 selects the operation programs for operating the valuable item management devices 100 that are permitted for the user that performed login (step S406). In a case where there are a plurality of permitted valuable item management devices 100, the terminal management unit 391 selects, with respect to all of the permitted valuable item management devices 100, the operation programs for operating the valuable item management devices 100.

The management-side storage unit 380 may be made to store the operation programs beforehand, or for example, a device other than the terminal management device 300, such as a management database device, may be made to store the operation programs beforehand.

After step S406, the terminal management unit 391 transmits the operation program selected in step S406 to the tablet terminal device 200 selected in step S403 via the management-side communication unit 310 (step S407: Operation Program). If a plurality of operation programs are selected in step S406, the terminal management unit 391 transmits all of the selected operation programs to the tablet terminal device 200.

In the tablet terminal device 200, the operation program transmitted by the terminal management unit 391 is stored in the terminal-side storage unit 280 by the terminal-side control unit 290 (step S408). For operation programs that require installation, the terminal management unit 391 installs the program stored in the terminal-side storage unit 280. In this manner, the terminal management unit 391 makes all of the operation programs transmitted by the terminal management unit 391 an executable state.

The terminal-side control unit 290 stores all of the programs transmitted by the terminal management unit 391 in the terminal-side storage unit 280, and when the programs become an executable state, a storage completion notification indicating that storage of the programs has completed is transmitted to the terminal management device 300 via the terminal-side communication unit 201 (step S409: Notify Recording Completion).

In the terminal management device 300 that has received the storage completion notification, the terminal management unit 391 makes the management-side display unit 320 display information indicating the tablet terminal device 200 selected in step S403 (step S410). For example, in step S403, if the terminal management unit 391 selects the tablet terminal device 200 stored in the number "2" slot of the terminal station 302 in FIG. 29, then in step S410, it makes the management-side display unit 320 display the number "2".

The method in which the terminal management device 300 specifies the tablet terminal device 200 selected in step S403 is not limited to a method where the number associated with the tablet terminal device 200 is displayed by the management-side display unit 320.

For example, the terminal station 302 may include a lamp such as a light-emitting diode for each slot that stores a tablet terminal device 200. In this case, the terminal management unit 391 displays the specified tablet terminal device 200 by illuminating the lamp of the slot in which the tablet terminal device 200 selected in step S403 is stored.

Alternatively, the terminal station 302 may include a locking mechanism that prevents a tablet terminal device 200 stored in a slot from being removed. In this case, in addition to, or instead of, displaying the specified tablet terminal device 200, the terminal management unit 391 may lock all of the tablet terminal devices 200 other than the specified tablet terminal device 200. The user is able to use a tablet terminal device 200 that has already stored the operation program by using the tablet terminal device 200 that can be removed.

### <Sixth Embodiment>

In the first embodiment to the fifth embodiment, a case where the valuable item management system 1 includes a terminal management device 300 is described. Alternatively, the valuable item management system 1 may have a configuration in which it does not include a terminal management device 300. In the sixth embodiment, a case where the valuable item management system 1 does not include a terminal management device 300 is described.

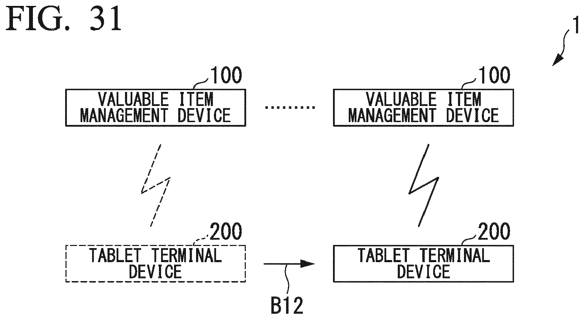

FIG. 31 is a schematic diagram showing a device configuration of a valuable item management system according to a sixth embodiment of the present invention. As shown in FIG. 31, the valuable item management system 1 includes a valuable item management device 100 and a tablet terminal device 200.

Among the units shown in FIG. 31, the same reference symbols (1, 100, and 200) are given to units having the same functionalities corresponding to the respective units shown in FIG. 1, and the description is omitted.

The valuable item management system 1 (FIG. 31) of the sixth embodiment is different from the valuable item management system 1 (FIG. 1) of the first embodiment in that it is does not include a terminal management device 300. In the other aspects, the device configuration of the valuable item management system 1 of the sixth embodiment is the same as that of the first embodiment.

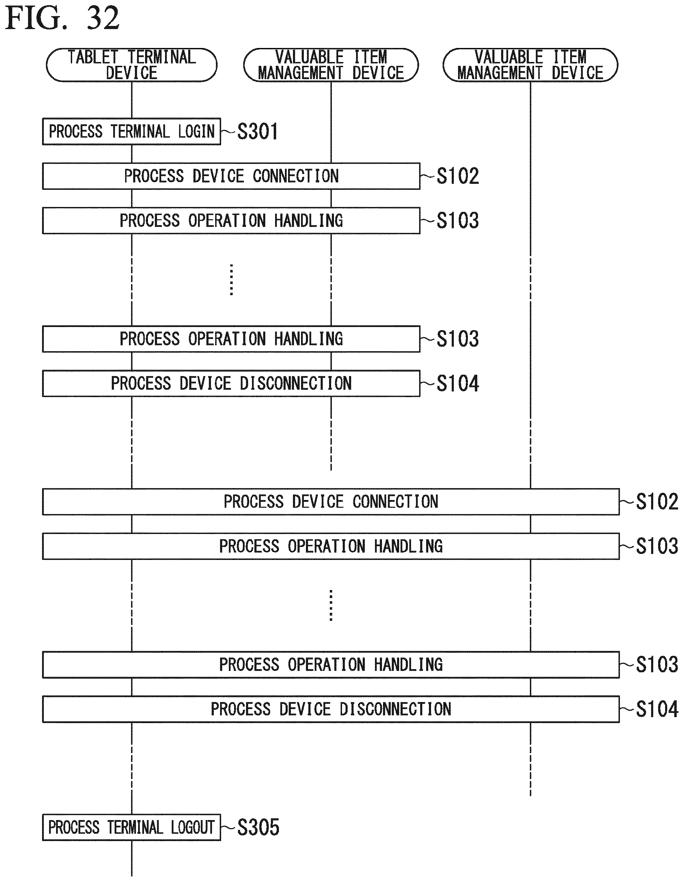

FIG. 32 is an explanatory view schematically showing an operation of a valuable item management system 1 in the sixth embodiment.

Among steps in FIG. 32, the same reference symbols (S102, S103, and S104) are given to those that perform the same processing as steps in FIG. 13, and the description is omitted. The processing in FIG. 32 respectively include steps S301 and S305 in place of steps S101 and S105 in FIG. 13. In contrast to FIG. 13, in which the tablet terminal device 200 and the terminal management device 300 perform the processing in steps S101 and S105, in the processing in FIG. 32, the tablet terminal device 200 alone performs the processing of steps S301 and S305. The other processing is the same as the case of FIG. 13.

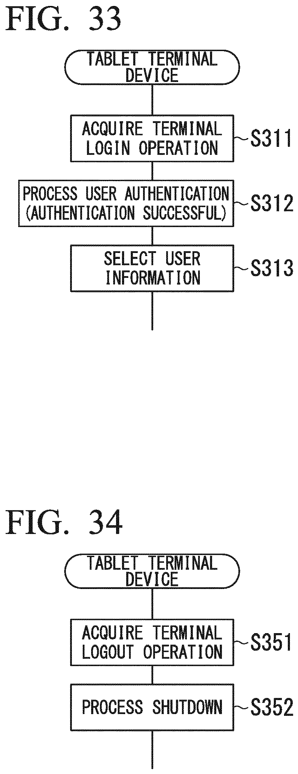

FIG. 33 is an explanatory view showing an example of a processing sequence in which the tablet terminal device 200 in the sixth embodiment performs login processing with respect to the user's tablet terminal device 200. The tablet terminal device 200 performs the processing in FIG. 33 in step S301 in FIG. 32.

In the processing in FIG. 33, the terminal-side operation input unit 230 receives a user operation requesting login with respect to the tablet terminal device 200 (step S311).

Then, the terminal-side user authentication unit 291 performs user authentication (step S312).

When the terminal-side user authentication unit 291 succeeds in the user authentication in step S312, it selects from among the user information for a plurality of users stored in the terminal-side storage unit 280, the information of the user that was successfully authenticated (step S313). Consequently, login processing of the user with respect to the tablet terminal device 200 becomes complete.

In step S312, if the terminal-side user authentication unit 291 fails the user authentication, the terminal-side display unit 220 displays a message indicating that the authentication failed. In addition, the terminal-side display unit 220 displays a message prompting the user operation requesting login in step S311 to be performed again.

FIG. 34 is an explanatory view showing an example of a sequence according to the sixth embodiment in which the user performs logout processing from the tablet terminal device 200. The tablet terminal device 200 performs the processing in FIG. 34 in step S305 in FIG. 32.

In the processing in FIG. 34, the terminal-side operation input unit 230 has received a user operation instructing logout from the tablet terminal device 200 (step S351).

Then, the terminal-side control unit 290 performs shutdown of the tablet terminal device 200 (step S352).

In the manner above, even in a case where the valuable item management system 1 does not include a terminal management device 300, the tablet terminal device 200 communicatively connects with the valuable item management device 100 in the same manner as the first embodiment to the fifth embodiment mentioned above, and operates as a terminal device of the valuable item management device 100. Consequently, the same effect as mentioned above can be obtained.

A valuable item management system according to an embodiment of the present invention includes: first and second valuable item management devices; and a terminal device that communicates with the first and second communicates with the first and second valuable item management devices. The terminal device includes: an operation input unit that receives, from a user, an instruction relating to the first and second valuable item management devices; an acquisition unit that acquires first and second information based on the received instruction, the first information indicating a process to be performed by the first valuable item management device, the second information relating to the process performed by the first valuable item management device and indicating a process to be performed by the second valuable item management device; and a communication unit transmits the acquired first information to the first valuable item management device, and transmits the acquired second information to the second valuable item management device.

In the above valuable item management system, the operation input unit may receive, as the instruction, an instruction of transferring cash from the first valuable item management device to the second valuable item management device. The acquisition unit may acquire, as the first information, information indicating a withdrawal of the cash from the first valuable item management device based on the instruction of transferring the cash. The acquisition unit may acquire, as the second information, information indicating a deposit of the cash into the second valuable item management device based on the instruction of transferring the cash.

In the above valuable item management system, the operation input unit may receive, as the instruction, an instruction including deposit and withdrawal information, the deposit and withdrawal information including both of: information indicating a deposit into or withdrawal from the first valuable item management device; and information indicating a deposit into or withdrawal from the second valuable item management device. The acquisition unit may separate the deposit and withdraw information into the information indicating the deposit into or withdrawal from the first valuable item management device, and the information indicating the deposit into withdrawal from the second valuable item management device.

In the above valuable item management system, the terminal device may communicatively connect with the first and second valuable item management devices when the user logs in to the terminal device.

In the above valuable item management system, the terminal device may further comprise: a storage unit that stores permission information indicating for each user a valuable item management device that the user is able to operate; and a device connection unit that determines, based on the permission information, whether or not to permit the communication unit to communicatively connect with a valuable item management device that is being communicatively connectable with the communication unit.

In the above valuable item management system, at least one of the first and second valuable item management devices may include: a storage unit that stores permission information indicating for each user a valuable item management device that the user is able to operate; and a communication unit that transmits the permission information to the terminal device. The terminal device may further comprise a device connection unit that determines, based on the permission information, whether or not to permit the communication unit of the terminal device to communicatively connect with a valuable item management device that is being communicatively connectable with the communication unit of the terminal device.

In the above valuable item management system, the acquisition unit may store the first information in a storage unit when the communication unit of the terminal device is not being communicatively connected with the first valuable item management device. The communication unit may transmit the stored first information to the first valuable item management device when the communication unit of the terminal device is being communicatively connected with the first valuable item management device.

In the above valuable item management system, the acquisition unit may store the second information in a storage unit when the communication unit of the terminal device is not being communicatively connected with the second valuable item management device. The communication unit may transmit the stored second information to the second valuable item management device when the communication unit of the terminal device is being communicatively connected with the second valuable item management device.

In the above valuable item management system, the terminal device may include a plurality of terminal devices. At least one of the first and second valuable item management devices may include a communication unit that simultaneously communicatively connect with the plurality of terminal devices.

In the above valuable item management system, the terminal device may further include a warning output unit that outputs a warning in a case where the operation input unit has received a logout operation from the terminal device in a state where the communication unit of the terminal device has not transmitted the first information to the first valuable item management device or has not transmitted the second information to the second valuable item management device.

In the above valuable item management system, the communication unit may transmit the acquired first information in a case where the first information is acquired by the acquisition unit. The communication unit may transmit the acquired second information in a case where the communication unit is being communicatively connected with the second valuable item management device.

In the above valuable item management system, the terminal device may further include a storage unit that stores the acquired second information.

A program that realizes all or a portion of the functionality of each of the processor-side control unit 190, the terminal-side control unit 290, and the management-side control unit 390 may be recorded to a computer-readable recording medium, and the processing of the respective units may be performed by reading the program recorded on the recording medium into a computer system, and then executing it. The "computer system" referred to here includes an operating system (OS) and hardware, such as peripheral devices.

Furthermore, the "computer-readable recording medium" refers to a portable medium, such as a flexible disk, a magnetic optical disk, a ROM, or a CD-ROM, or a storage device built-in to the computer system, such as a hard disk. Moreover, the program may be one that achieves a portion of the functionality described above, and further, it may realize the functionality described above in a combination with a program that is already stored in the computer system.

The foregoing has described in detail several embodiments of the present invention with reference to the drawings. However, specific configurations are in no way limited to these embodiments, and include design changes, and the like, without departing from the scope of the invention.

## Claims

1. A valuable item management system comprising:
first and second valuable item management devices; and
a terminal device that communicates with the first and second communicates with the first and second valuable item management devices, the terminal device comprising:
an operation input unit that receives, from a user, an instruction relating to the first and second valuable item management devices;
an acquisition unit that acquires first and second information based on the received instruction, the first information indicating a process to be performed by the first valuable item management device, the second information relating to the process performed by the first valuable item management device and indicating a process to be performed by the second valuable item management device; and
a communication unit transmits the acquired first information to the first valuable item management device, and transmits the acquired second information to the second valuable item management device.

2. The valuable item management system according to claim 1,
wherein the operation input unit receives, as the instruction, an instruction of transferring cash from the first valuable item management device to the second valuable item management device,
the acquisition unit acquires, as the first information, information indicating a withdrawal of the cash from the first valuable item management device based on the instruction of transferring the cash, and
the acquisition unit acquires, as the second information, information indicating a deposit of the cash into the second valuable item management device based on the instruction of transferring the cash.

3. The valuable item management system according to claim 1,
wherein the operation input unit receives, as the instruction, an instruction including deposit and withdrawal information, the deposit and withdrawal information including both of: information indicating a deposit into or withdrawal from the first valuable item management device; and information indicating a deposit into or withdrawal from the second valuable item management device, and
the acquisition unit separates the deposit and withdraw information into the information indicating the deposit into or withdrawal from the first valuable item management device, and the information indicating the deposit into withdrawal from the second valuable item management device.

4. The valuable item management system according to any one of claims 1 to 3, wherein the terminal device communicatively connects with the first and second valuable item management devices when the user logs in to the terminal device.

5. The valuable item management system according to any one of claims 1 to 4,
wherein the terminal device further comprises:
a storage unit that stores permission information indicating for each user a valuable item management device that the user is able to operate; and
a device connection unit that determines, based on the permission information, whether or not to permit the communication unit to communicatively connect with a valuable item management device that is being communicatively connectable with the communication unit.

6. The valuable item management system according to any one of claims 1 to 4,
wherein at least one of the first and second valuable item management devices comprises:
a storage unit that stores permission information indicating for each user a valuable item management device that the user is able to operate; and
a communication unit that transmits the permission information to the terminal device, and
the terminal device further comprises a device connection unit that determines, based on the permission information, whether or not to permit the communication unit of the terminal device to communicatively connect with a valuable item management device that is being communicatively connectable with the communication unit of the terminal device.

7. The valuable item management system according to any one of claims 1 to 6,
wherein the acquisition unit stores the first information in a storage unit when the communication unit of the terminal device is not being communicatively connected with the first valuable item management device, and
the communication unit transmits the stored first information to the first valuable item management device when the communication unit of the terminal device is being communicatively connected with the first valuable item management device.

8. The valuable item management system according to any one of claims 1 to 7,
wherein the acquisition unit stores the second information in a storage unit when the communication unit of the terminal device is not being communicatively connected with the second valuable item management device, and
the communication unit transmits the stored second information to the second valuable item management device when the communication unit of the terminal device is being communicatively connected with the second valuable item management device.

9. The valuable item management system according to any one of claims 1 to 5, 7 and 8,
wherein the terminal device comprises a plurality of terminal devices, and
at least one of the first and second valuable item management devices comprises a communication unit that simultaneously communicatively connect with the plurality of terminal devices.

10. The valuable item management system according to any one of claims 1 to 9, wherein the terminal device further comprises a warning output unit that outputs a warning in a case where the operation input unit has received a logout operation from the terminal device in a state where the communication unit of the terminal device has not transmitted the first information to the first valuable item management device or has not transmitted the second information to the second valuable item management device.

11. The valuable item management system according to claim 1,
wherein the communication unit transmits the acquired first information in a case where the first information is acquired by the acquisition unit, and
the communication unit transmits the acquired second information in a case where the communication unit is being communicatively connected with the second valuable item management device.

12. The valuable item management system according to claim 1, wherein the terminal device further comprises a storage unit that stores the acquired second information.

13. A terminal device for communicating with first and second valuable item management devices, the terminal device comprising:
an operation input unit that receives, from a user, an instruction relating to the first and second valuable item management devices;
an acquisition unit that acquires first and second information based on the received instruction, the first information indicating a process to be performed by the first valuable item management device, the second information relating to the process performed by the first valuable item management device and indicating a process to be performed by the second valuable item management device; and
a communication unit transmits the acquired first information to the first valuable item management device, and transmits the acquired second information to the second valuable item management device.

14. An information transmission method for a terminal device that communicates with first and second valuable item management devices, the information transmission method comprising:
receiving, from a user, an instruction relating to the first and second valuable item management devices;
acquiring first and second information based on the received instruction, the first information indicating a process to be performed by the first valuable item management device, the second information relating to the process performed by the first valuable item management device and indicating a process to be performed by the second valuable item management device;
transmitting the acquired first information to the first valuable item management device; and
transmitting the acquired second information to the second valuable item management device.

15. A program for a computer that communicates with first and second valuable item management devices, the program causing the terminal device to execute:
receiving, from a user, an instruction relating to the first and second valuable item management devices;
acquiring first and second information based on the received instruction, the first information indicating a process to be performed by the first valuable item management device, the second information relating to the process performed by the first valuable item management device and indicating a process to be performed by the second valuable item management device;
transmitting the acquired first information to the first valuable item management device; and
transmitting the acquired second information to the second valuable item management device.
